(19) Europäisches Patentamt
European Patent Office
Office européen des brevets

(11) **EP 3 340 123 A1**

(12) **EUROPEAN PATENT APPLICATION**

(43) Date of publication:
**27.06.2018 Bulletin 2018/26**

(51) Int Cl.:
***G06N 3/04*** (2006.01)   ***G06N 3/08*** (2006.01)

(21) Application number: **17205517.0**

(22) Date of filing: **05.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.12.2016   US 201615385334**

(71) Applicant: **Intel Corporation**
**Santa Clara, CA 95054 (US)**

(72) Inventors:
• **SRINIVASA, Narayan**
 **Portland, OR 97229 (US)**
• **CAO, Yongqiang**
 **Portland, OR 97229 (US)**
• **WILD, Andreas**
 **Portland, OR 97229 (US)**

(74) Representative: **Samson & Partner Patentanwälte mbB**
**Widenmayerstraße 6**
**80538 München (DE)**

(54) **SUPERVISED TRAINING AND PATTERN MATCHING TECHNIQUES FOR NEURAL NETWORKS**

(57)     Systems and methods for supervised learning and cascaded training of a neural network are described. In an example, a supervised process is used for strengthening connections to classifier neurons, with a supervised learning process of receiving a first spike at a classifier neuron from a processing neuron in response to training data, and receiving an out-of-band communication of a second desired (artificial) spike at the classifier neuron that corresponds to the classification of the training data. As a result of spike timing dependent plasticity, connections to the classifier neuron are strengthened. In another example, a cascaded technique is disclosed to generate a plurality of trained neural networks that are separately initialized and trained based on different types or forms of training data, which may be used with cascaded or parallel operation of the plurality of trained neural networks.

FIG. 6

**Description**

TECHNICAL FIELD

Embodiments described herein generally relate to neural networks learning techniques, and in particular, the embodiments described herein relate to algorithms for supervised learning and for pattern matching applied within spiking neural network implementations.

BACKGROUND

A variety of approaches are currently used to implement neural networks in computing systems. The implementation of such neural networks, commonly referred to as "artificial neural networks", generally include a large number of highly interconnected processing elements that exhibit some behaviors similar to that of organic brains. Such processing elements may be implemented with specialized hardware, modeled in software, or a combination of both.

Neural networks are configured to implement features of "learning", which generally is used to adjust the weights of respective connections between the processing elements that provide particular pathways within the neural network and processing outcomes. Existing approaches for implementing learning in neural networks have involved various aspects of unsupervised learning (*e.g.*, techniques to infer a potential solution from unclassified training data, such as through clustering or anomaly detection), supervised learning (*e.g.*, techniques to infer a potential solution from classified training data), and reinforcement learning (*e.g.*, techniques to identify a potential solution based on maximizing a reward). However, each of these learning techniques are complex to implement, and extensive supervision or validation is often required to ensure the accuracy of the changes that are caused in the neural network.

BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:

FIG. **1** illustrates a diagram of a simplified neural network, according to an example;
FIG. **2** illustrates the use of spikes in a neural network pathway implementing learning from spike timing dependent plasticity, according to an example;
FIG. **3** illustrates the use of spikes in a neural network pathway implementing supervised learning from spike timing dependent plasticity based on a triggered desired spike, according to an example;
FIGS. **4A** and **4B** illustrate graphs of long-term potentiation and long-term depression from a function of supervised spike time dependent plasticity, according to an example;
FIG. **5A** illustrates a graph of values from an unsupervised spike timing learning rule, according to an example;
FIG. **5B** illustrates a graph of values from an supervised spike timing learning rule, using a desired spike value, according to an example;
FIG. **6** illustrates a diagram of a neural network adapted for implementing a supervised spike timing learning rule, according to an example;
FIG. **7** illustrates a flowchart of operations for implementing a supervised spike timing learning process, according to an example;
FIG. **8** illustrates a sequence of operations for implementing cascading training operations in a neural network, according to an example;
FIG. **9** illustrates a sequence of operations for predicting classification from parallel evaluation operations in a trained neural network, according to an example;
FIG. **10** illustrates a sequence of operations for predicting classification from cascading evaluation operations in a neural network, according to an example;
FIG. **11** illustrates a flowchart of a method for operating a neural network implementation that is trained with use of a supervised spike timing learning rule, according to an example;
FIG. **12** illustrates a flowchart of a method for performing a supervised learning process within a spiking neural network implementation, according to an example;
FIG. **13** illustrates a flowchart of a method for conducting a cascading pattern training process within a neural network implementation, according to an example;
FIG. **14** illustrates a flowchart of a parallel processing method for determining a classification within a neural network implementation, according to an example; and

**FIG. 15** illustrates a flowchart of a cascaded processing method for determining a classification within a neural network implementation, according to an example.

**FIG. 16** illustrates a block diagram of a neuromorphic core, according to an example.

DETAILED DESCRIPTION

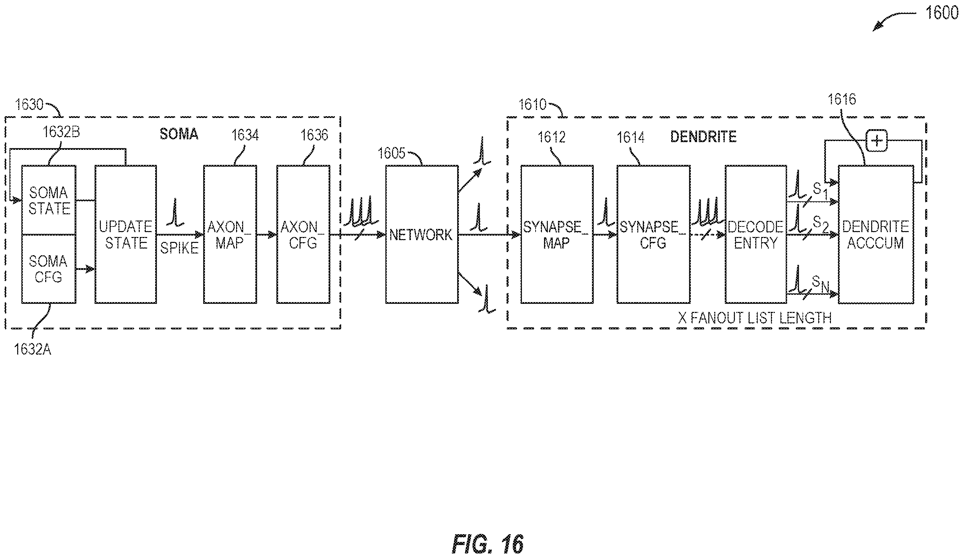

In the following description, methods, configurations, and related apparatuses are disclosed for the implementation of enhanced supervised learning and operational procedures for a neural network. In an example, the supervised learning rules may be enhanced from the application of desired output spikes that influence the activity of a neural network layer having a plurality of classifier neurons. As another example, the operation of the plurality of classifier neurons may be enhanced by performing a cascading pattern classification on training data, to repeat the classification among a plurality of instances of the neural network until a classification approach is generated for all input data. The techniques described herein may be utilized, for example, in a hardware-based implementation of a spiking neural network such as in a neuromorphic computing architecture that includes respective hardware features to represent neurons, synapses, axons, and dendrites for processing actions of the spiking neural network. (A detailed example hardware-based implementation of a neuromorphic computing architecture is discussed below with reference to **FIG. 16**).

As discussed in the following examples, the presently disclosed configurations may be used to implement supervised learning algorithms for a spiking neural network, based on spike timing and specially invoked spikes for training. In the following examples, the spiking neural network uses spike dependent timing plasticity to adjust the strength of connections (*e.g.*, synapses) between neurons in a neural network based on correlating the timing between an input spike and an output spike. The implementation of the presently described learning procedure involves an additional spike to enhance the connections being made with determinative neurons (*e.g.*, classifier neurons), thus making the output of a neural network instance emphasized to produce a certain answer, such as a classification or label from a particular determinative neuron.

With a first technique discussed herein, a classification layer of a spiking neural network may be influenced with spikes and spike trains to cause pattern convergence behavior. Although an unsupervised learning process may operate to converge and portray a neuron pattern corresponding to a particular pattern, the presently disclosed technique appends a supervised technique for a classification produced in a classification layer added to the neural network processing layers. The supervised technique uses an out-of-band communication (referred to herein as a "desired spike") for a chosen pattern at a classifier neuron in the classification layer, to cause the neuron to more quickly converge on data indicating the expected pattern. Thus, a particular classifier neuron that is chosen during the supervised training process will signal the existence of the pattern, and the connections to the prior processing neurons that caused the firing of this particular classifier neuron are strengthened accordingly.

Additionally, with a second technique discussed herein, the presently disclosed configurations may be used to implement a cascading network design for pattern classification, separately or in combination with techniques for the supervised learning procedure described herein. The cascading pattern classification may be applied onto multi-class problem sets, such as complex problem sets with large amounts of training data that involve several classes of problems. As a non-limiting example, the image detection for classifications of hand-written characters (e.g., A-Z, 0-9) may differ when produced from left-handed writing and right-handed writing. Due to the complexities in training a single network across the classes, it is advantageous to split the processing actions among multiple networks that will perform the classifications.

In an example, the cascading pattern classification operates to evaluate all test inputs from input data to the spiking neural network initially, but determine which test inputs that the initial spiking neural network did not correctly classify with training data (e.g., which inputs were unable to reach a classification, were unable to reach the correct expected classification, or were unable to reach a classification exceeding a defined confidence value threshold). These failures are then analyzed in a second spiking neural network, while the successful test cases are not, which produces a second set of outcomes. In this way, the second spiking neural network is not biased by the cases dealt with effectively by the first spiking neural network. This technique may be repeated for additional neural network implementations, relaxing or adapting the match criteria as the data analysis creates a series of spiking neural network implementations that recognize patterns above a certain threshold. In a further example, this trained series of spiking neural networks may be operated in parallel, with the spiking neural network implementation producing an outcome with the greatest confidence being the network that wins for making the decision of a classification.

Existing approaches for implementing learning methods into a neural network commonly involve use of a supervised learning process that implements weight adjustments and threshold changes through techniques such as backpropagation. With use of the techniques described herein, a supervised learning process may be extended to influence and enhance classification-specific outcomes. Additionally, further techniques described herein allow the supervised learning process to run on multiple instances of the neural network that are initialized to different values, to allow convergence and reinforcement of a best-fit classification. These techniques offer a particularly efficient implementation in neuromorphic hardware that is designed to implement recurrence and dynamic feedback though a spiking neural network design.

As used herein, references to "neural network" for at least some examples is specifically meant to refer to a "spiking neural network"; thus, many references herein to a "neuron" are meant to refer to an artificial neuron in a spiking neural network. It will be understood, however, that certain of the following examples may also apply to other forms of artificial neural networks.

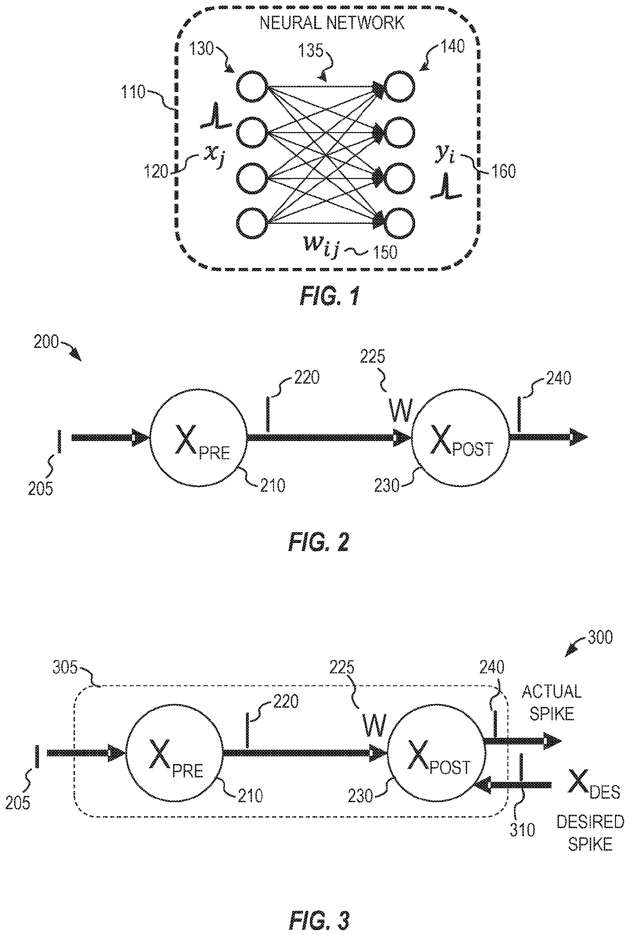

**FIG. 1** illustrates an example diagram of a simplified neural network 110, providing an illustration of connections 135 between a first set of nodes 130 (*e.g.*, neurons) and a second set of nodes 140 (*e.g.,* neurons). Neural networks (such as the simplified neural network 110) are commonly organized into multiple layers, including input layers and output layers. It will be understood that the simplified neural network 110 only depicts two layers and a small numbers of nodes, but other forms of neural networks may include a large number of nodes, layers, connections, and pathways.

Data that is provided into the neutral network 110 is first processed by synapses of input neurons. Interactions between the inputs, the neuron's synapses and the neuron itself govern whether an output is provided via an axon to another neuron's synapse. Modeling the synapses, neurons, axons, etc., may be accomplished in a variety of ways. In an example, neuromorphic hardware includes individual processing elements in a synthetic neuron (e.g., neurocore) and a messaging fabricate to communicate outputs to other neurons. The determination of whether a particular neuron "fires" to provide data to a further connected neuron is dependent on the activation function applied by the neuron and the weight of the synaptic connection (*e.g.*, $w_{ij}$ 150) from neuron $j$ (*e.g.*, located in a layer of the first set of nodes 130) to neuron $i$ (*e.g.,* located in a layer of the second set of nodes 140). The input received by neuron $j$ is depicted as value $x_j$ 120, and the output produced from neuron $i$ is depicted as value $y_i$ 160. Thus, the processing conducted in a neural network is based on weighted connections, thresholds, and evaluations performed among the neurons, synapses, and other elements of the neural network.

In an example, the neural network 110 is established from a network of spiking neural network cores, with the neural network cores communicating via short packetized spike messages sent from core to core. For example, each neural network core may implement some number of primitive nonlinear temporal computing elements as neurons, so that when a neuron's activation exceeds some threshold level, it generates a spike message that is propagated to a fixed set of fanout neurons contained in destination cores. The network may distribute the spike messages to all destination neurons, and in response those neurons update their activations in a transient, time-dependent manner, similar to the operation of real biological neurons.

The neural network 110 further shows the receipt of a spike, represented in the value $x_j$ 120, at neuron $j$ in a first set of neurons (*e.g.,* a neuron of the first set of nodes 130). The output of the neural network 110 is also shown as a spike, represented by the value $y_i$ 160, which arrives at neuron $i$ in a second set of neurons (*e.g.,* a neuron of the first set of nodes 140) via a path established by the connections 135. In a spiking neural network all communication occurs over event-driven action potentials, or spikes. In an example, the spikes convey no information other than the spike time as well as a source and destination neuron pair. Computation occurs in each neuron as a result of the dynamic, nonlinear integration of weighted spike input using real-valued state variables. The temporal sequence of spikes generated by or for a particular neuron may be referred to as its "spike train."

In an example of a spiking neural network, activation functions occur via spike trains, which means that time is a factor that has to be considered. Further, in a spiking neural network, each neuron is modeled after a biological neuron, as the artificial neuron receives its inputs via synaptic connections to one or more "dendrites" (part of the physical structure of a biological neuron), and the inputs affect an internal membrane potential of the artificial neuron "soma" (cell body). In a spiking neural network, the artificial neuron "fires" (e.g., produces an output spike), when its membrane potential crosses a firing threshold. Thus, the effect of inputs on a spiking neural network neuron operate to increase or decrease its internal membrane potential, making the neuron more or less likely to fire. Further, in a spiking neural network, input connections may be stimulatory or inhibitory. A neuron's membrane potential may also be affected by changes in the neuron's own internal state ("leakage").

**FIG. 2** illustrates the use of spikes in an example neural network pathway 200 implementing learning from spike timing dependent plasticity. As shown, the pathway 200 includes one or more inputs 205 (*e.g.,* a spike or spike train) being provided to a neuron $X_{PRE}$ 210 for processing. The neuron $X_{PRE}$ 210 causes a first spike 220, which is propagated to a neuron $X_{POST}$ 230 for processing. The connection between the neuron $X_{PRE}$ 210 and the neuron $X_{POST}$ 230 (*e.g.,* a synaptic connection) is weighted based on a weight 225. If inputs received at neuron $X_{POST}$ 230 (*e.g.*, received from one or multiple connections) reach a particular threshold, the neuron $X_{POST}$ 230 will activate (*e.g.*, "fire"), causing a second spike 240. The determination that the second spike 240 is caused as a result of the first spike 220 is used to strengthen the connection between the neuron $X_{PRE}$ 210 and the neuron $X_{POST}$ 230 (e.g., by modifying the weight 225) based on principles of spike timing dependent plasticity.

Specifically, spike timing dependent plasticity is used to adjust the strength of the connections (*e.g.*, synapses) between neurons in a neural network, by correlating the timing between an input spike (*e.g.,* the first spike 220) and an output spike (*e.g.,* the second spike 240). Input spikes that closely (e.g., as defined by a configuration parameter such as ten milliseconds or a function) precede an output spike for a neuron are considered causal to the output and are strengthened, while other input spikes may be weakened. For example, the adjusted weight produced from spike timing dependent plasticity may be represented by the following:

$$\dot{W} = A^+\overline{X_{pre}}X_{post} - A^-X_{pre}\overline{X_{post}}$$

In this example, $A^+\overline{X_{pre}}X_{post}$ represents long term potentiation (LTP) and $A^-X_{pre}\overline{X_{post}}$ represents long term depression (LTD).

The illustrated neural network pathway, when combined with other neurons operating on the same principles, exhibit a natural unsupervised learning as repeated patterns in the inputs 205 will have their pathways strengthened overtime. Conversely, noise, which may produce the spike 220 on occasion, will not be regular enough to have associated pathways strengthened. Generally, the original weightings of any connections is random. Accordingly, in a network including a plurality of neurons that may converge on patterns present in the inputs 205, it is undetermined *a priori* which output neuron will reliable signal the presence of any one pattern. The supervised learning technique discussed below addresses this issue.

**FIG. 3** illustrates the use of spikes in an example neural network pathway 300 implementing a supervised learning process 305 from spike timing dependent plasticity (supervised-spike time dependent plasticity, or "S-STDP") based on a triggered desired spike. Similar to the processing operations depicted in **FIG. 2,** the inputs 205 in **FIG. 3** are provided to the neuron $X_{PRE}$ 210 for processing, which then causes the first spike 220 to be communicated to the neuron $X_{POST}$ 230. As shown, a desired spike 310 is provided to the neuron $X_{POST}$ 230, after the receipt of the first spike 220, to emphasize that the neuron $X_{POST}$ 230 is the intended classification entity for the particular training input data. The desired spike 310 serves to reinforce the connections (e.g., strengthen the weights) in the neural network that cause the firing of the neuron $X_{POST}$ 230, such as the connection between $X_{PRE}$ 210 and $X_{POST}$ 230, to ensure the determinative outcome (classification) resulting from the neuron $X_{POST}$ 230.

Based on the weight 225 of the connection and any threshold established for firing, the neuron $X_{POST}$ 230 may or may not produce a second spike 240 output from the neuron $X_{POST}$ 230 (an "actual" or "naturally produced" spike). However, the occurrence of this second spike 240 may be trained as follows to produce a spike train correlated to the classification assigned to the neuron $X_{POST}$ 230. During a training procedure, where the classification of the input data is known, the expected classification that is represented by the neuron $X_{POST}$ 230 will receive the desired spike 310 to ensure that connections which cause the expected outcome (the firing of the neuron $X_{POST}$ 230) are strengthened. This may be repeated for multiple iterations of training for the neural network, which further use spike timing dependent plasticity to gradually increase the weight of desired connections (and decrease the weight of undesired connections). Ultimately, the second spike 240 will be produced as a result of the connections to neuron $X_{POST}$ 230. The repeated training of the neuron $X_{POST}$ 230 using the desired spikes 310 may be terminated when the actual spike 240 coincides with the desired spike 310 within a threshold. Thus, while a pattern of actual spikes may initially be divergent from a pattern of desired spikes, as the training progress, the two patterns will converge.

In an example, the adjusted weight produced from supervised spike timing dependent plasticity may be represented by the following:

$$\dot{W} = W_0 + A^+\overline{X_{pre}}X_{des} - A^-X_{post}\overline{X_{pre}}$$

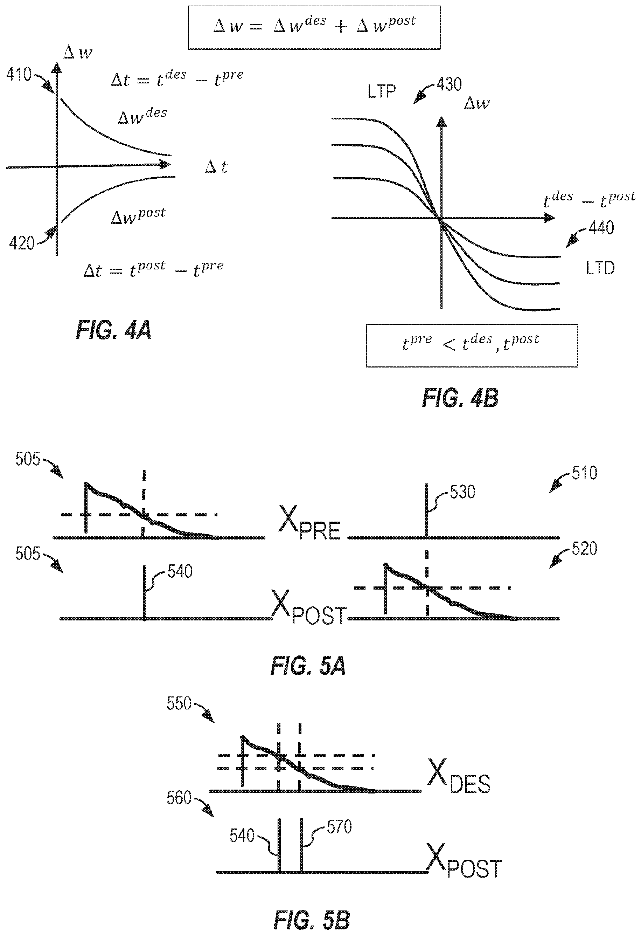

In this example, $A^+\overline{X_{pre}}X_{des}$ represents long term potentiation (LTP) and $A^-X_{post}\overline{X_{pre}}$ represents long term depression (LTD). In this example, note that the desired spike 310 replaces the actual spike 240 in the LTP calculation. Potentiation of a synapse occurs when the post synaptic neuron receives a desired spike, whereas depression occurs when the post synaptic neuron spikes itself. Depending on the relative timing of $X_{des}$ and $X_{post}$, the combination will lead to a convergence of $X_{post}$ towards $X_{des}$, whether that requires a potentiation or a depression of a weight. The effects of both potentiation and depression from desired spikes are shown further in **FIG. 4** and described below.

In an example further discussed below, the neuron $X_{POST}$ 230 may operate as a part of a classification layer, such as at a bottom-level (*e.g.*, a final level) added to a neural network, which produces a result of a classification, label, or other determination from the neural network processing layers. Thus, the specific classification that is achieved at the neuron $X_{POST}$ 230 from the synaptic connections with the neuron $X_{PRE}$ 210 (and any other neurons providing spike input) to cause a classification at the neuron $X_{POST}$ 230 may be strengthened as a result of the desired spike 310. For instance, if the spike sequence is: $X_{POST\_j}$ (due to some other inputs *k*), $X_{PRE\_i}$, $X_{DES}$, then the desired spike will eventually potentiate the connection over which the $X_{PRE\_i}$ signal arrived. This has the effect of emphasizing the outcome of the desired classification.

**FIG. 4A** illustrates a graph of changes from LTP and LTD from a function of S-STDP. The $\Delta t$ for LTP (based on a desired spike) 410 and the $\Delta t$ for LTD 420 (based on a post spike) use different times to compute the $\Delta t$ based on the pre spike $t^{pre}$. As shown, depending on how far $t^{pre}$ is in the past, the net S-STDP tuning curve as a function of the desired spike/post spike difference becomes more and more flat.

**FIG. 4B** illustrates a mapping of respective values that indicate the LTP 430 occurring from "pre-before-post" spikes including desired spikes, such as produced from the invoking of the desired spike 310 discussed above with reference to **FIG. 3. FIG. 4B** also illustrates the mapping of respective values that indicate the LTD 440 occurring from other spikes, such as would occur during normal operation of spike timing dependent plasticity.

**FIG. 5A** illustrates example graphs of values from an unsupervised spike timing learning rule. The top-left plot 505 denotes the pre-trace $\overline{X_{pre}}$, and the bottom-left plot 515 denotes the post spike $X_{post}$ 540, where a LTP happens because the post spike is after the pre-spike. The top-right plot 510 denotes the pre-spike $X_{pre}$ 510 and the bottom-right plot 520 denotes the post trace $\overline{X_{post}}$, where a LTD happens because the post spike occurs before the pre-spike.

**FIG. 5B** illustrates example graphs of values from a supervised spike timing learning rule, using a desired value. The top plot 550 denotes pre-trace $\overline{X_{pre}}$, and the bottom plot 560 denotes an arrived desired spike or actual post spike. A LTP happens when a desired spike 570 arrives, and a LTD happens when an actual post spike 540 arrives. The size of LTP (or LTD) is determined by the pre-trace value when the desired (or actual) spike arrives.

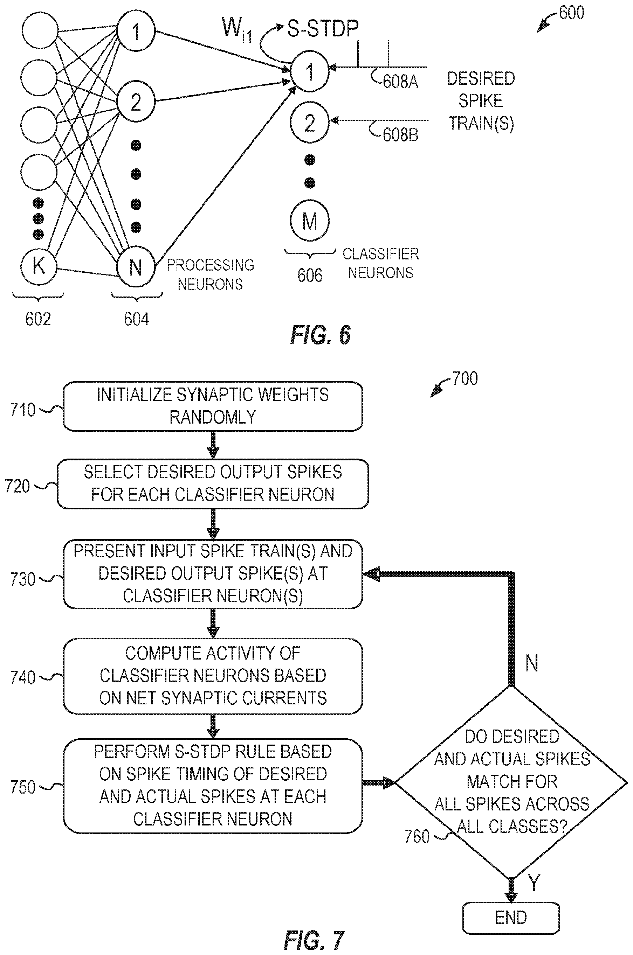

**FIG. 6** illustrates a diagram 600 of an example neural network adapted for implementing a supervised spike timing learning rule, such as the supervised spike timing dependent plasticity (S-STDP) process discussed above. As shown, a set of processing neurons 604 at a layer of the neural network, neurons 1-*N*, are connected to a particular neuron of a set of classifier neurons 606, which includes neurons 1-*M*. In the depicted diagram 600, input neurons "1", "2", and "*N*" have connections to classifier neuron "1". The neurons 1-*N* are further connected to a prior layer of the neural network, neurons 1-*K* 602, which have potential connections to the prior layer of the neural network. Although not depicted, additional prior layers of the neural network may also be involved and include additional layers of connections.

The classifier neurons 606 (neurons 1-*M*) correlate respectively to a discrete classification, label, or other outcome to be produced from the neural network. The classifier neurons are further shown as receiving one or more spike trains that include a desired spike (or spikes, as applicable). For example, the classifier neuron 1 is shown as receiving a first spike train 608A that includes multiple desired spikes, used to strengthen the classification of classifier "1" for a particular set of input training data. In contrast, the classifier neuron 2 is shown as receiving a second spike train 608B that does not include desired spikes, used to weaken the classification of classifier "2" for the same particular set of input training data. With the receipt of the desired spikes at classifier neuron 1, the connections from the processing neurons 604 to classifier neuron 1 will be strengthened by the first spike train 608A and the accompanying desired spikes (*e.g.,* due to long term potentiation from spike timing dependent plasticity, causing an increase in the weights $w_{i1}$ between the processing neurons 604 and classifier neuron 1); whereas any connections from the processing neurons 604 to the classifier neuron 2 will be weakened by the spike train 608B that does not include desired spikes for the training classification.

The operation of the supervised learning rule leverages the unsupervised pattern learning characteristics of STDP networks and coerces the output to a particular classifier neuron 606. This is useful because the usually random nature of network initialization in STDP networks results in a designer being unable to determine beforehand which processing neuron 604 will ultimately signal a particular pattern. However, assuming that a processing neuron 604 does signal the particular pattern, the desired spike train, corresponding to known inputs, should coincide with the output of the processing neuron 604 for that pattern. Thus, based on the procedure discussed above, the specific classifier neuron 606 will strengthen connections to that processing neuron, and thus reliably provide a classification spike train.

**FIG. 7** illustrates a flowchart 700 of operations for implementing a supervised spike timing learning process. The following process may be repeated for each classification or classification sample intended to be trained in a neural network as part of the supervised spike timing learning process; further, aspects of the following operations may also be repeated depending on the characteristics of the neural network and the implementation of the desired and actual (naturally-produced) spikes with the respective classifier neurons.

The flowchart 700 shows the operation of a training instance of the neural network, which may include the initialization of connections (*e.g.*, synapses) within the neural network to random weight values (operation 710). In some examples, these weight values are set within a range of initialization values. The flowchart 700 proceeds with the selection of desired output spikes for each classifier neuron (operation 720), such as from the correlation of one or more classifications to respective training data samples in a training data set.

The flowchart 700 continues with the processing of the respective training data samples from the training data set within the neural network, which causes the presentation of an input spike train to a layer of classifier neurons (operation 730) for a particular training data input. The connections to the layer of classifier neurons are then evaluated, with an evaluation performed at the classifier neurons based on net synaptic currents provided to respective classifier neurons (operation 740). A supervised spike timing dependent plasticity reinforcement process is then implemented based on the spike timing of desired and actual spikes at each classifier neuron, including the potentiation or depression of respective classifier neurons (operation 750). In the case that the actual spikes produced from a respective classifier neuron matches the desired spikes, for all classifier neurons in the classification layer (determination 760), then the training process may complete for the particular training data input. In the case that the actual spikes produced from a respective classifier neuron does not match the desired spikes, for all classifier neurons in the classification layer (determination 760), then further emphasis of the connections to the classifier neuron may occur by repeating presentation the input spike trains and desired output spikes at the classifier neuron (operation 730, 740), and strengthening the connections further through spike timing dependent plasticity (operation 750).

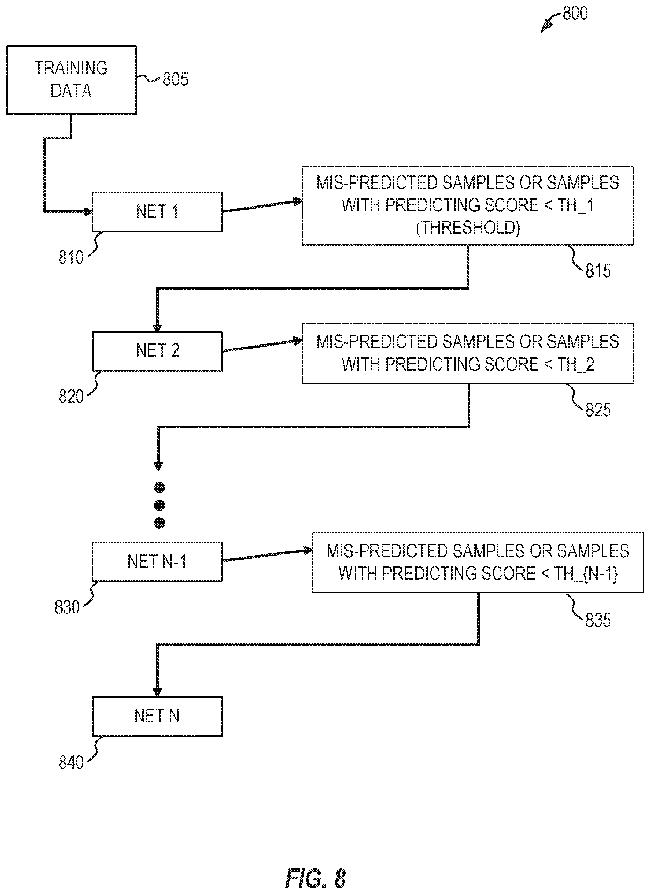

FIG. 8 illustrates a sequence 800 of example operations for implementing cascading training operations in a neural network. The following operations may be implemented on the output of a classification-based neural network, such as a classification-based neural network that implements the supervised spike-timing plasticity techniques described above in relation to FIGS. 6 and 7. However, it will be understood that the following cascading training operation may be implemented independently of the supervised spike timing dependent plasticity training process described above.

As shown, the sequence 800 depicts a set of training data 805 being provided as input to a first instance of a neural network 810. This first instance of the neural network 810 will operate to produce a classification or label for the various characteristics of the training data (including classifications of discrete data instances, such as to classify the input data for based recognized attributes in the input data using techniques such as object recognition, character recognition, and the like). The first instance of the neural network 810 will be trained on the complete set of the training data 805. After the training, a set of correctly classified samples and excluded samples is determined. In an example, the excluded samples 815 include one or more training samples that were mis-predicted in the training process, such as samples unable to reach a classification within a number of training instances, or were unable to be trained to match an intended classification. In a further example, the first set of excluded samples 815 include one or more training samples that were predicted by the neural network, but with a prediction score (e.g., confidence level) that is lower than a first threshold value.

The sequence 800 further depicts operations for cascaded training of other instances of neural networks. As shown, the first set of excluded samples 815 is provided to a second instance of the neural network 820 (e.g., a new instance of the neural network that has synaptic weights initialized randomly). Again, the second instance of the neural network 820 will be trained from another set of correctly classified samples (a subset of the first set of excluded samples, not shown), while the network will remain untrained for one or more excluded samples 825 (the remaining portion of the first set of excluded samples). The one or more excluded samples 825 again include mis-predicted samples, or samples with a prediction score (e.g., confidence level) that is lower than a second threshold value. The second threshold value may be lower than the first threshold value, to allow additional classifications to be attempted.

The sequence 800 further depicts the cascaded training of other additional instances of the neural network. This cascading training is performed on cascading subsets of training data, until $N$ instances of the network are produced, with neural network $N-1$ 830 producing a final set of one or more excluded samples 835. This final set of one or more excluded samples 835 may be based on mis-predicted samples, or samples with a prediction score (e.g., confidence level) that is lower than some determined threshold value, either with the threshold value progressively lowered or not as the cascaded training process proceeds. In some examples, the threshold values are not progressively lowered; for instance, the threshold values may stay unchanged or even heightened depending on the particular applications.

In an example, a final classification training may be produced from the neural network $N$ 840 on the basis of a best-fit or a best-attempt classification. The results of this final neural network N 840 may be based simply on inferences. The resulting trained neural networks 1-N (e.g., networks 810, 820, 830, 840) then may be used in cascading or parallel evaluation operations, as described in the following examples.

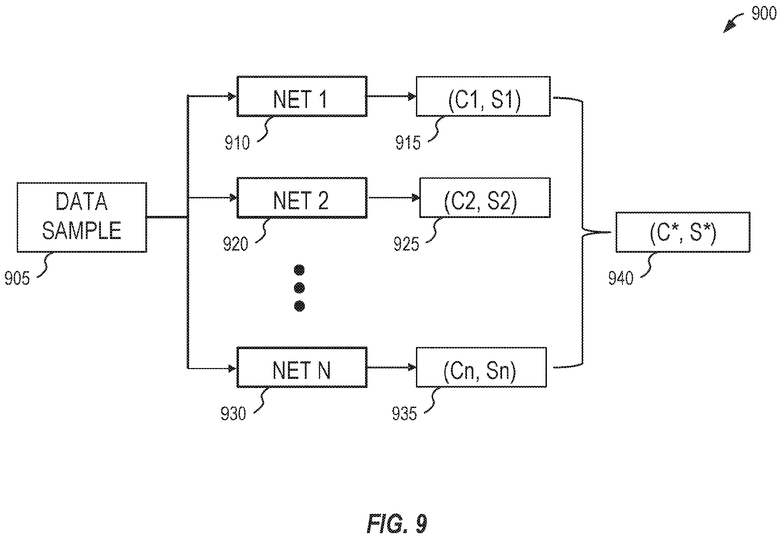

FIG. 9 illustrates a sequence of example operations 900 for predicting classification from parallel evaluation operations in a neural network. In an example, the sequence of operations 900 may be performed after the training of neural networks 1-$N$ as a result of the process described above with reference to FIG. 8. Thus, it will be understood that neural networks 910, 920, 930 depicted in FIG. 9 may correspond to the trained neural networks 810, 820, 840. In other examples, the other forms of training may be implemented for the neural networks 910, 920, 930.

In the operations 900, a data sample 905 is provided to the plurality of neural networks for parallel processing, to determine which neural network converges at a highest probability solution. In an example, the data sample 905 is processed by a first neural network 910, to produce an expected classification ($C1$) and classification score ($S1$) pair 915. Likewise, the data sample 905 is processed in parallel by a second neural network 920, to produce an expected classification ($C2$) and classification score ($S2$) pair 925. This is repeated for each of the $N$ neural networks, with neural network $N$ producing an expected classification ($Cn$) and classification score ($Sn$) pair 935.

Thus, a result of the processing operations 900 is to produce a predicted class label ($Ci$) by a particular neural network (Net $i$), with an associated predicting score ($Si$). In the final classification set 940, $$S^* = \max_i(S_i),$$ and $C^*$ is the final predicted class label that is associated with S*.

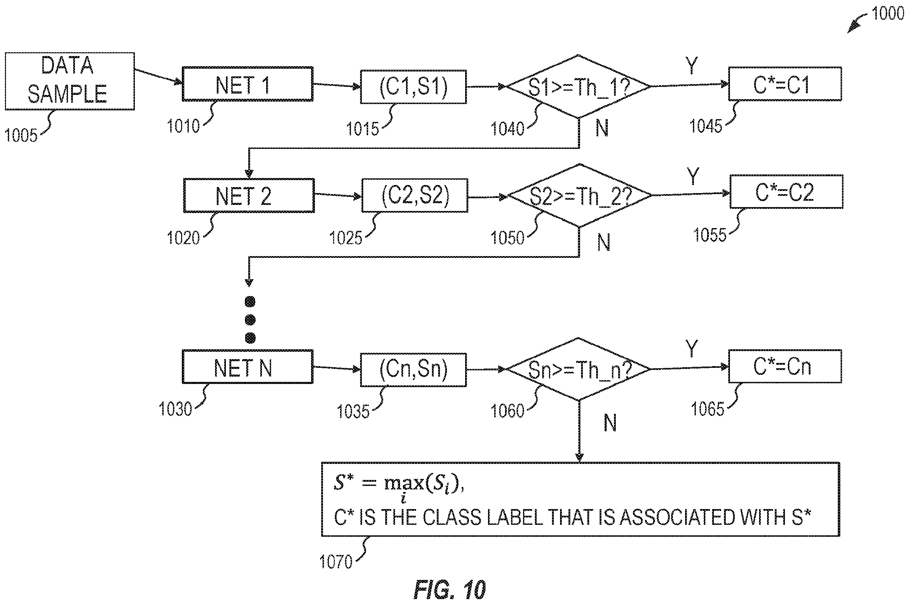

**FIG. 10** illustrates a flowchart of example operations 1000 predicting classification from cascading evaluation operations in a neural network. In an example, the sequence of operations 1000 may be performed after the training of neural networks 1-$N$ as a result of the process described above with reference to **FIG. 8.** Thus, it will be understood that neural networks 1010, 1020, 1030 depicted in **FIG. 10** may correspond to the trained neural networks 810, 820, 840. In other examples, the other forms of training may be implemented for the neural networks 1010, 1020, 1030.

In the operations 1000, a data sample 1005 is provided to the plurality of neural networks for cascaded processing, to determine which neural network converges at a highest probability solution. In an example, the data sample 1005 is processed by a first neural network 1010, to produce an expected classification ($C1$) and classification score ($S1$) pair 1015. A determination is made whether the classification score ($S1$) exceeds a first threshold ($Th\_1$) (determination 1040). If the classification score exceeds the threshold, the class label is determined as equal to the produced classification ($C1$) (outcome 1045).

If the classification score does not exceed the threshold, then the data sample (or an unclassified portion of the data sample) is further processed by a second neural network 1020, to produce an expected classification ($C2$) and classification score ($S2$) pair 1025. Again, a determination is made whether the classification score ($S2$) exceeds a second threshold ($Th\_2$) (determination 1050), with the class label being determined if the classification score exceeds the second threshold (outcome 1055). If not, further processing is repeated for each of the $N$ neural networks unless a classification score exceeds the threshold, with neural network $N$ 1030 producing an expected classification ($Cn$) and classification score ($Sn$) pair 1035, that is evaluated relative to a threshold (*e.g.,* determination 1060), with a particular classification selected if it exceeds the threshold (*e.g.,* outcome 1065). If no classification exceeds the threshold, then $$S^* = \max_i(S_i),$$ and $C^*$ is the final predicted class label that is associated with $S^*$ (outcome 1070).

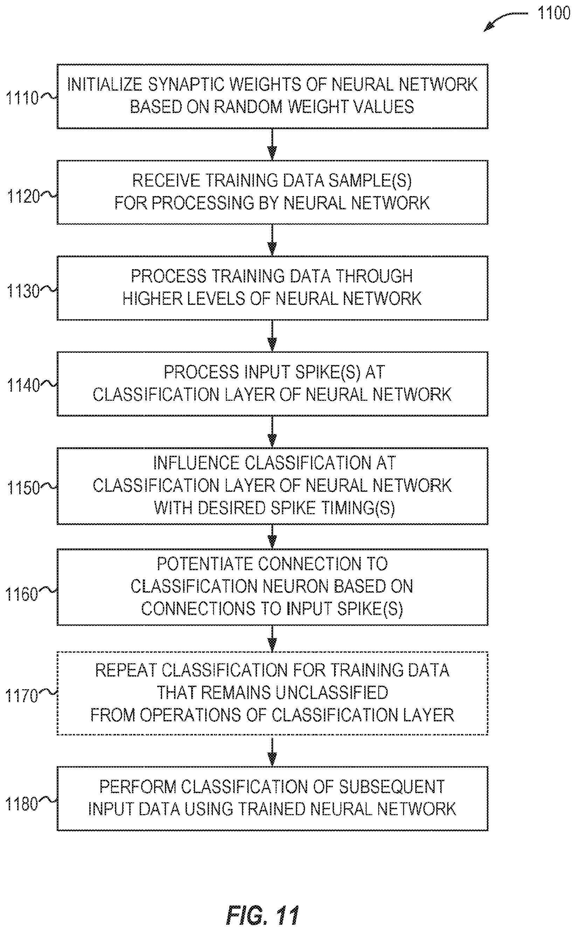

**FIG. 11** illustrates a flowchart 1100 of an example method for operating a neural network implementation that is trained with use of a supervised spike timing learning rule. The flowchart 1100 depicts operations for training that generally correspond to the supervised spike timing dependent plasticity procedure discussed above with reference to **FIGS. 6** and **7,** among other figures. However, it will be understood that modifications to the supervised spike timing dependent plasticity procedure may also affect the processing or outcome of the flowchart 1100.

The operations of the flowchart 1100 for training include the initialization of the synaptic weights of the neural network to an initial state, such as based on random weight values (operation 1110). The operations of the flowchart 1100 further include receipt of training data for processing by the neural network (operation 1120), such as by the receipt of one or more training samples used to train the neural network to a particular classification. The operations of the flowchart 1100 continue to processing of the input data through one or more higher levels of the neural network (operation 1130), which produces spikes that are then processed at a classification layer of the neural network (operation 1140). For example, one or more spikes as part of one or more spike trains may be output from a layer of the neural network, and provided as input to an added classification layer.

The operations of the flowchart 1100 further include training at a respective classification in the classification layer of the neural network, for the particular classification that is intended to be supervised. This includes the influence of the particular classification neuron at the classification layer, using one or more desired spike timings within one or more spike trains to a particular classification neuron that corresponds to the particular classification (operation 1150). This causes the connections between the neurons in the higher layer and the particular classification neuron to be potentiated (strengthened) (operation 1160). Additionally, one or more spike trains may be provided to other classification neurons to de-emphasize (*e.g.*, depress) the connections to other classification neurons that do not correspond to the particular classification.

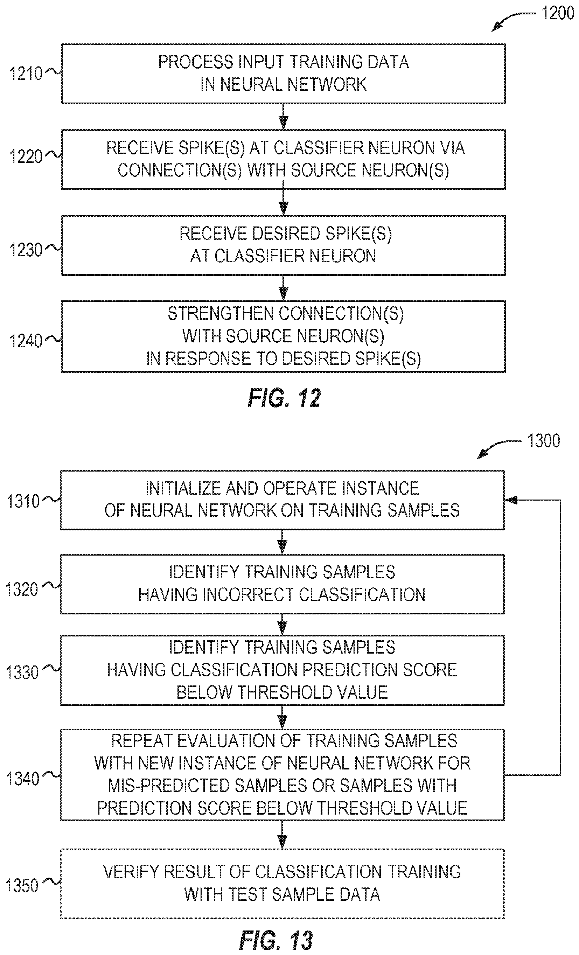

In some examples (optionally), further processing is performed on input data that remains unclassified from operations of the classification layer, such as for classification connections that do not exceed a particular threshold or for classifications that cannot be determined through connections of the neural network. Such further processing may include repeating the classification operations for input training data that remains unclassified (operation 1170), such as through the re-initialization of other instances of the neural network. Techniques for training such classifications with a cascaded learning process are further described above with reference to FIG. 8 and below with reference to FIG. 13.

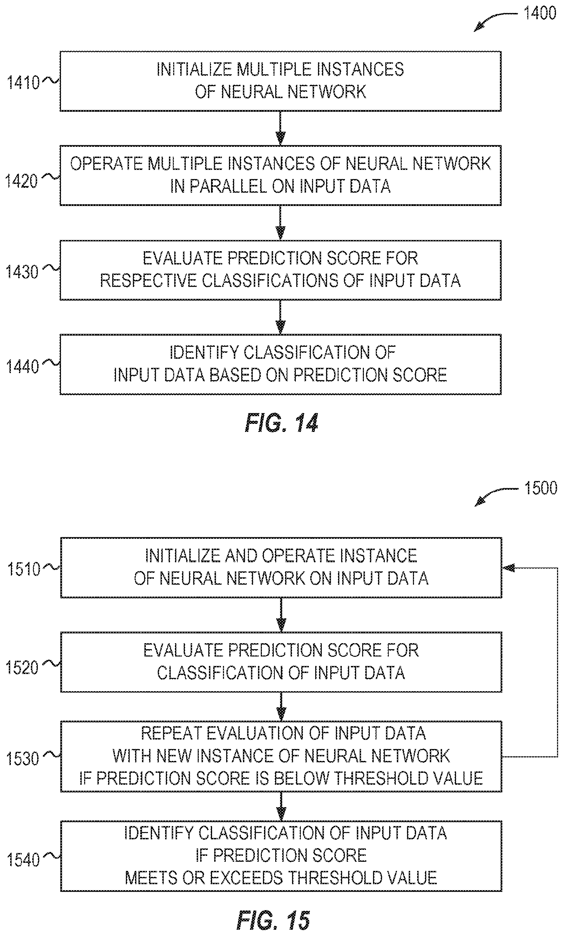

The operations of the flowchart 1100 conclude with processing operations for use of the neural network, for performing a classification of subsequent input data (e.g., new data) with use of the trained neural network (operation 1180). Techniques for operation of the trained neural network may include variations of those techniques described below with reference **FIGS. 14** and **15,** for evaluating data with multiple instances of the trained neural network.

**FIG. 12** illustrates a flowchart 1200 of a method of performing a supervised learning process within a neural network implementation. In an example, the method operations of flowchart 1200 may be implemented by electronic operations to perform supervised learning in a spiking neural network, implemented in a computing device comprising circuitry to perform electronic operations of supervised learning, implemented in a neuromorphic computing hardware comprising computing hardware to support learning operations among respective neuron elements, or implemented in at least one machine-readable storage medium comprising instructions that cause a computing machine to perform supervised learning operations.

The flowchart 1200 depicts operations for processing input training data in the neural network (operation 1210), such as for multiple training data items in a training data set. A classifier neuron that is provided within a layer of the neural network, which corresponds to a desired classification, will operate to receive one or more spikes from connections that correspond to higher layers of the neural network (operation 1220), in response to processing of the input training data. The classifier neuron will additionally receive one or more desired spikes caused from the supervised training process, to emphasize a particular classification known for the input training data (operation 1230). As a result of spike timing dependent plasticity operations, the connections with the source neurons will be strengthened (potentiation) in response to the desired spikes *(e.g.,* pre before post strengthening) (operation 1240). Further training operations may include the weakening (depression) of connections to other classifier neurons that do not correspond to the particular classification.

**FIG. 13** illustrates a flowchart 1300 of an example method for conducting a cascading pattern training process within a neural network implementation. In an example, the cascade pattern training process depicted in flowchart 1300 may be combined with the supervised learning process of **FIG. 12;** in other examples, the cascade pattern training process depicted in flowchart 1300 may operate independently of any forms of connection potentiation provided from supervised spike timing dependent plasticity. Thus, it will be understood that the following cascaded training aspects of **FIG. 13** may be applicable to a number of forms of neural networks, including non-spiking neural network implementations.

The flowchart 1300 depicts operations for initializing and operating an instance of a neural network on a set of training samples (operation 1310). The training operations performed on the neural network will operate to attempt to determine classifications of the respective training samples, and the strengthening of connections to reach such classifications. However, excluded training samples are identified that obtain a known incorrect classification from the training process (operation 1320) or that obtain a classification prediction score below a defined threshold value from the training process (operation 1330).

The excluded training samples, which were unable to achieve a satisfactory classification from training in the first instance of the neural network, are then set aside and identified for subsequent training. This subsequent training process is depicted as including the repeating of an evaluation of the excluded training samples in a new instance of the neural network (operation 1340). In an example, the new instance of the neural network is provided from initialization of weight values to random values. In further optional examples, the result of the cascaded classification training is then verified with test sample data (operation 1350), such as may be provided with verification operations implemented with the parallel or cascaded processing further depicted in **FIGS. 14** or **15.**

**FIG. 14** illustrates a flowchart 1400 of an example parallel processing method for determining a classification within a neural network implementation. This processing method, which corresponds to the parallel processing depicted for **FIG. 9,** may be performed as part of a validation process *(e.g.,* to verify that one or a plurality of trained models will satisfactorily address a test data set), or as part of a classification processing *(e.g.*, pattern matching or input recognition on new, never-seen data).

The flowchart 1400 depicts operations for initializing multiple instances of a neural network (operation 1410), such as instances of a neural network that are trained with the cascaded training process described above for **FIGS. 8** and **13.** The multiple network instances are then operated in parallel on input data (operation 1420), and prediction scores (e.g., classification confidence scores) are then produced and evaluated from the multiple network instances (operation 1430). An identified expected classification of the input data then may be determined based on the prediction scores (operation 1440). Further variation to the parallel processing operations may occur based on the characteristics of the input data or the trained network(s).

**FIG. 15** illustrates a flowchart 1500 of an example cascaded processing method for determining a classification within a neural network implementation. This processing method, which corresponds to the cascaded processing depicted for **FIG. 8,** may be performed as part of a validation process *(e.g.,* to verify that one or a plurality of trained models will satisfactorily address a test data set), or as part of a classification processing *(e.g.*, pattern matching or input recognition on new, never-seen data).

The flowchart 1500 depicts operations for initializing and operating a first instance of a neural network (operation 1510), such as a first instances of a neural network that is trained with the cascaded training process described above for **FIGS. 8** and **13.** A prediction score *(e.g.,* a classification confidence score) is then produced and evaluated from the first network instance (operation 1520). If the prediction score is below a threshold value, then the evaluation processes (operations 1510, 1520) are repeated with a second instance of a neural network operation 1530), until the prediction score meets or exceeds the threshold value (or another best-fit network is identified that produces a classification) (operation 1540). Further variation to the cascaded processing operations may occur based on the characteristics of the input data or the trained network(s).

In an example, the operation of the spiking neural network discussed herein may be provided by neuromorphic computing hardware having a plurality of cores. In such scenarios, respective cores of the plurality of cores are configurable to implement respective neurons used in the spiking neural network, and spikes are used among the respective cores to communicate information on processing actions of the spiking neural network. A non-limiting illustration of a neuromorphic core architecture for a spiking neural network is provided from the following example.

**FIG. 16** is an illustrative block diagram of an example of a neuromorphic core 1600. **FIG. 16** also illustrates certain details of a life cycle of one neuron's spike as it propagates through the network 1605, dendrite 1610, and soma 1630, according to an example. Communication and computation in the neuromorphic architecture occurs in an event driven manner in response to spike events as they are generated and propagated throughout the neuromorphic network. Note that the soma and dendrite components shown in **FIG. 16,** in general, will belong to different physical cores.

Although the spikes in **FIG. 16** are illustrated as analog voltages spikes, in an actual hardware neuromorphic architecture implementation, spikes are represented digitally in different forms at different points in the pipeline. For example, when traversing the neuromorphic network, the spikes may be encoded as short data packets identifying a destination core and Axon ID.

Each stage in the spike data flow is described below.

SOMA_CFG 1632A and SOMA_STATE 1632B: A soma 1630 spikes in response to accumulated activation value upon the occurrence of an update operation at time T. Each neuron in a core 1600 has, at minimum, one entry in each of the soma CFG memory 1632A and the soma STATE memory 1632B. On each synchronization time step T, the configuration parameters for each neuron are read from SOMA CFG 1632A in order to receive the incoming weighted neurotransmitter amounts received from dendrites corresponding to the neuron, and to update soma state values accordingly. More particularly, each neuron's present activation state level, also referred to as its Vm membrane potential state, is read from SOMA_STATE 1632B, updated based upon a corresponding accumulated dendrite value, and written back. In some embodiments, the accumulated dendrite value may be added to the stored present activation state value to produce the updated activation state level. In other embodiments, the function for integrating the accumulated dendrite value may be more complex and may involve additional state variables stored in SOMA_STATE. The updated Vm value may be compared to a threshold activation level value stored in SOMA_CFG 1632A and, if Vm exceeds the threshold activation level value in an upward direction, then the soma produces an outgoing spike event. The outgoing spike event is passed to the next AXON_MAP 1634 stage, at time $T+D_{axon}$, where $D_{axon}$ is a delay associated with the neuron's axon, which also is specified by SOMA CFG 1632A. At this point in the core's pipeline, the spike may be identified only by the core's neuron number that produced the spike. If the updated Vm value exceeds the threshold, then the stored activation level may be reset to an activation level of zero. If the updated Vm value does not exceed the threshold, then the updated Vm value may be stored in the SOMA_STATE memory 1632B for use during a subsequent synchronization time step.

AXON_MAP 1634: The spiking neuron index is mapped through the AXON_MAP memory table 1634 to provide a (base_address, length) pair identifying a list of spike fanout destinations in the next table in the pipeline, the AXON_CFG 1636 routing table. AXON_MAP 1634 provides a level of indirection between the soma compartment index and the AXON_CFG 1636 destination routing table. This allows AXON CFG's 1636 memory resources to be shared across all neurons implemented by the core in a flexible, nonuniform manner. In an alternate embodiment, the AXON_MAP 1634 state is integrated into the SOMA CFG 1632A memory. However, splitting this information into a separate table saves power since the AXON_MAP 1634 information is only needed when a neuron spikes, which is a relatively infrequent event.

AXON_CFG 1636: Given the spike's base address and fanout list length from AXON_MAP 1634, a list of (dest_core, axon id) pairs is serially read from the AXON_CFG 1636 table. Each of these becomes an outgoing spike message to the network 1605, sent serially one after the other. Since each list is mapped uniquely per neuron index, some neurons may map to a large number of destinations (i.e., a multicast distribution), while others may only map to a single destination (unicast). List lengths may be arbitrarily configured as long as the total entries does not exceed the total size of the AXON_CFG 1636 memory.

NETWORK 1605: The network 1605 routes each spike message to a destination core in a stateless, asynchronous manner. From the standpoint of the computational model, the routing happens in zero time, i.e., if the spike message is generated at time T, then it is received at the destination core at time T relative to the source core's time step. (Note: due to possible barrier synchronization non-determinism, if so configured, the destination core may receive the message at a time step $T\pm\Delta D_{BS}$, where $\Delta D_{BS}$ is the maximum barrier synchronization delay of the system.) The AxonID spike packet payload is an opaque identifier interpreted uniquely by the destination core and has no meaning to the network.

SYNAPSE_MAP 1612: As each spike message is received by its destination core, the AxonID identifier from the spike message's payload is mapped through the SYNAPSE_MAP 1612 table to give a (base_address, length) pair that corresponds to one or more dendrites of the neuron identified in the spike message. This lookup is directly analogous to the AXON_MAP 1634 table lookup. The mapping assigns a list of local synapses that specify connections to dendrite compartments within the core. Note that each AxonID mapped by the source core's AXON_CFG 1636 entry is meaningful only to the destination core, so there are no global allocation constraints on the AxonID space. In an alternative embodiment, similar to AXON_MAP 1634, the (base_address, length) information mapped by SYNAPSE_MAP 1612 is specified directly from AXON_CFG 1636 and sent as the spike payload, instead of AxonID. However, the use of the SYNAPSE_MAP 1612 indirection allows the AXON_CFG memory 1636 and the spike payload to be smaller, thereby saving overall area and power for large systems.

SYNAPSE_CFG 1614: Similar to AXON CFG 1636, SYNAPSE_CFG 1614 is a memory of variable-length routing lists that are shared among all of the core's dendritic compartments. However, unlike AXON_CFG 1636, each entry in SYNAPSE_CFG 1614 has a highly configurable format. Depending on the needs of the particular neuromorphic algorithm used, formats may be specified that provide more or less information per synapse, such as higher weight and delay precision. SYNAPSE_CFG 1614 is a direct-mapped table, with each mapped entry having a fixed bit width, so higher precision fields imply fewer synapses per entry, and lower precisions enable more synapses per entry. In general, each SYNAPSE_CFG 1614 entry is uniquely decoded to produce a set of synaptic connections, with each synaptic connection being a (DendriteIdx, Weight, Delay) three-tuple. Hence a list of m SYNAPSE_CFG 1614 entries as specified by the SYNAPSE_MAP 1612 entry will become a set of $\left(\sum_{i=1}^{m} n_i\right)$ synaptic connections, where $n_i$ is the number of synapses in the $i$th SYNAPSE_CFG 1614 entry in the list.

DENDRITE_ACCUM 1616: Finally, each spike's synaptic connections map to counters within the dendrite compartment that maintain the sum of all weighted spikes received for future handling by soma. DENDRITE_ACCUM 1616 is a two-dimensional read-modify-write memory indexed by (DendriteIdx, (T+Delay)%D$_{MAX}$). As described earlier, the T+Delay term identifies the future time step at which the soma will receive the spike. The %D$_{MAX}$ modulo operation implements a circular scheduler buffer. The read-modify-write operation simply linearly accumulates the received synaptic weight:

$$\text{DENDRITE\_ACCUM[idx, (T+D)\%D}_{MAX}] = \text{DENDRITE\_ACCUM[idx,}$$
$$\text{(T+D)\%D}_{MAX}] + \text{W.}$$

As described above, at each time step T, the soma 1630 receives an accumulation of the total spike weight received (WeightSum) via synapses mapped to specific dendritic compartments. In the simplest embodiment, each dendritic compartment maps to a single neuron soma. Such an embodiment implements a single-compartment point neuron model, consistent with nearly all previous neuromorphic frameworks and hardware designs published to date. An extension of this architecture disclosed in a separate patent application provides support for multi-compartment neuron models.

The SOMA_CFG 1632A and SOMA_STATE 1632B memories serve as the basic architectural ingredients from which a large space of spiking neural network models may be implemented. Simpler models may minimize the size of these memories by modeling synaptic input responses with single-timestep current impulses, low state variable resolution with linear decay, and zero-time axon delays. More complex neuron models may implement higher resolution state variables with exponential decay, multiple resting potentials per ion channel type, additional neuron state variables for richer spiking dynamics, dynamic thresholds implementing homeostasis effects, and multiple output spike timer state for accurate burst modeling and large axonal delays. These variations in neuron model features represent choices over a spectrum of functionality localized to the soma stage in the architecture. Greater neuroscience detail costs higher SOMA CFG 1632A and SOMA_STATE 1632B resources and greater logic area and power, while cruder neuroscience models require less resources and lower power. The neuromorphic architecture herein supports a very wide spectrum of such choices.

The soma configuration in some embodiments implements a simple current-based Leaky Integrate-and-Fire (LIF) neuron model. The subthreshold dynamics of the LIF neuron model are described by the following discrete-time dimensionless differential equations:

$$u[t] = \left(1 - \frac{1}{\tau_s}\right) u[t-1] + \sum_{i \in l} w_i s_i[t]$$

$$v[t] = \left(1 - \frac{1}{\tau_m}\right) v[t-1] + u[t] + b$$

where:

    i. $\tau_s$ and $\tau_m$ are synaptic and membrane time constants, respectively;
    ii. $I$ is the set of fanin synapses for the neuron;
    iii. $w_i$ is the weight of synapse $i$;
    iv. $s_i[t]$ is the count of spikes received for time step $t$ at synapse $i$, after accounting for synaptic delays; and
    v. $b$ is a constant bias current.

For computational efficiency, the exponential scalings are configured and scaled according to the following fixed-point approximation:

$$\left(1-\frac{1}{\tau}\right) \approx \frac{4096-D}{4096}$$

where the $D$ decay constants ($D_s$ and $D_m$) can range over [0,4096], corresponding to $\tau$ time constants nonlinearly spaced over the range [1,∞].

When the membrane voltage $v[t]$ passes some fixed threshold 0 from below, the neuron schedules an output spike for $t+T_{axon}$ based on a constant configured axon delay ($T_{axon} \in$ [0,15]), and $v[t]$ is mapped to 0. The membrane potential is held at 0 until $t+T_{ref}$, where $T_{ref}$ is the refractory delay, which may be specified as a constant in SOMA CFG 1632A or configured to be pseudorandomly generated.

Due to the high connectivity fanouts in neuromorphic architectures, the state associated with synaptic connections dominates the physical cost of hardware realizations of spiking neural networks. Mammalian neurons commonly have on the order of 10,000 synapses. A synapse generally can be reasonably modeled with a small number of bits, on the order of eight to fifty less state and configuration needed for the LIF soma state. Thus in a biologically faithful hardware implementation with 10,000 synapses per neuron, where all of these parameters are either uniquely programmable or dynamic, synaptic state dominates by a factor of well over 200.

Furthermore, depending on the synaptic neural network algorithmic application used by the neuromorphic network, the range of fanouts per neuron and the range of synaptic state may vary considerably. For example, some pattern matching algorithms call for only a single bit of weight precision per synapse, whereas others require real-valued connectivity weights encoded with up to eight bits per synapse. Other algorithmic features such as temporal coding, polychronous computation, and dynamic learning can add considerably more state per synapse. The synaptic connectivity of some algorithms have simple all-to-all connectivity between the neurons which can be simply specified in dense matrix form. Many other algorithms assume sparse connectivity between neurons, or by some dynamic pruning process converge to a sparse network that cannot be represented efficiently with dense matrices. All told, the amount of desired state per synapse can span over a range of 10x and higher, depending on the application need.

The neuromorphic architecture described herein advantageously supports a broad range of such synaptic connectivity models. The neuromorphic architecture described herein leaves it up to software to program the desired level of synaptic precision and mapping flexibility, subject to total memory size constraints.

The capability to support a wide range of synaptic connectivity models arises from the following ingredients.

The SYNAPSE_MAP/SYNAPSE_CFG 1612/1614 and AXON_MAP/AXON_CFG 1634/1636 pairs of mapping tables on each core's ingress and egress sides, respectively. Each pair's MAP table provides the indirection needed to allocate variable-length connectivity lists anywhere in the subsequent CFG memory. This allows the CFG memory entries to be shared among the neural resources contained within the core.

Each memory address of SYNAPSE_CFG 1614 maps to an entry whose format is explicitly specified by the entry itself. For example, in some neuromorphic network embodiments, only bits 2:0 have a fixed interpretation over all SYNAPSE _CFG 1614 entries. This field specifies one of eight formats over the rest of the bits in the entry. Depending on the entry type, different precisions of synaptic parameters are encoded. Entry formats with lower precision parameters support more synapses, while higher precision parameters may be specified if desired at the expense of fewer synapses in the entry.

Similarly, the entries in the AXON_CFG 1636 memory may likewise encode different spike message types. This allows spikes traveling shorter distances from the source core to consume fewer resources since the information required to identify a destination core increases with its distance. In particular, spikes destined to cores physically located on different integrated circuit chips may require a hierarchical address, with the higher-level hierarchical portion of the address stored in an additional AXON_CFG 1636 entries.

Since the space of useful encoding formats may exceed the number of formats any particular core typically needs, further indirection in the format determination provides additional flexibility with lower hardware cost. The TYPE field (bits 2:0) described above may index a global SYNAPSE_CFG_FORMAT table that parametrically maps the three-bit field to a richer encoding format specified by many more bits.

In order to normalize different ranges of parameter values across the variable precisions of different SYNAPSE_CFG 1614 entries, each format has a further programmable indirection table associated with it. For example, if the native DENDRITE_ACCUM 1616 input bit width is 8 bits, then a 1-bit synaptic weight W from a SYNAPSE_CFG 1614 entry may be mapped through a two-entry, 8b-valued table to give the full-precision values associated with the '0' and '1' programmed W values.

Embodiments used to facilitate and perform the techniques described herein may be implemented in one or a combination of hardware, firmware, and software. Embodiments may also be implemented as instructions stored on a machine-readable storage medium, which may be read and executed by at least one processor to perform the operations described herein. A machine-readable storage medium may include any non-transitory mechanism for storing information in a form readable by a machine (e.g., a computer). For example, a machine-readable storage device may include aspects of read-only memory (ROM), random-access memory (RAM), magnetic disk storage media, optical storage media, flash-memory devices, and other storage devices and media.

It should be understood that the functional units or capabilities described in this specification may have been referred to or labeled as components, modules, or mechanisms, in order to more particularly emphasize their implementation independence. Such components may be embodied by any number of software or hardware forms. For example, a component or module may be implemented as a hardware circuit comprising custom very-large-scale integration (VLSI) circuits or gate arrays, semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together, but may comprise disparate instructions stored in different locations which, when joined logically together, comprise the component or module and achieve the stated purpose for the component or module.

Indeed, a component or module of executable code may be a single instruction, or many instructions, and may even be distributed over several different code segments, among different programs, and across several memory devices or processing systems. Similarly, operational data may be identified and illustrated herein within components or modules, and may be embodied in any suitable form and organized within any suitable type of data structure. The operational data may be collected as a single data set, or may be distributed over different locations including over different storage devices, and may exist, at least partially, merely as electronic signals on a system or network. The components or modules may be passive or active, including agents operable to perform desired functions.

Examples, as described herein, may include, or may operate by, logic or a number of components, or mechanisms, including circuit sets and circuitry combinations. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Additional examples of the presently described method, system, and device embodiments include the following, non-limiting configurations. Each of the following non-limiting examples may stand on its own, or may be combined in any permutation or combination with any one or more of the other examples provided below or throughout the present disclosure.

Example 1 is a method of implementing a supervised learning procedure in a spiking neural network, the method comprising electronic operations including: receiving, with a classifier neuron of a neural network, a first spike via a synaptic connection, the synaptic connection established between the classifier neuron and a processing neuron of the neural network, wherein the first spike is provided from the processing neuron in response to training data of a particular classification; receiving, with the classifier neuron, a second spike that is received subsequent to the first spike, wherein the second spike is provided to indicate a desired spike based on an association of the classifier neuron with the particular classification; and strengthening the synaptic connection between the classifier neuron and the processing neuron, in response to the second spike.

In Example 2, the subject matter of Example 1 optionally includes wherein the electronic operations for strengthening the synaptic connection between the classifier neuron and the processing neuron include increasing a weight of the synaptic connection between the classifier neuron and the processing neuron, wherein the weight of the synaptic connection is used by the classifier neuron to determine a classification of subsequent input data, wherein the classifier neuron is one of a plurality of neurons that are respectively associated with a plurality of classifications.

In Example 3, the subject matter of any one or more of Examples 1-2 optionally include the electronic operations further including: receiving, with the classifier neuron, at least one other spike via at least one other synaptic connection with at least one other processing neuron of the neural network, wherein the other spike is provided in response to the training data of the particular classification; and strengthening the other synaptic connection between the classifier neuron and the other processing neuron, in response to the second spike.

In Example 4, the subject matter of Example 3 optionally includes the electronic operations further including: transmitting, from the classifier neuron, a third spike in response to the first spike, wherein the third spike is a naturally produced spike produced from the classifier neuron in response to the first spike and the other spike exceeding a threshold.

In Example 5, the subject matter of any one or more of Examples 3-4 optionally include the electronic operations further including: initializing respective synaptic weights prior to processing the training data in the neural network, the respective synaptic weights applied in the synaptic connection between the classifier neuron and the processing neuron and in the respective synaptic connection between the classifier neuron and the other processing neuron.

In Example 6, the subject matter of Example 5 optionally includes wherein the electronic operations for initializing respective synaptic weights includes initializing the respective synaptic weights based on random values.

In Example 7, the subject matter of any one or more of Examples 1-6 optionally include wherein the second spike is provided to the classifier neuron in a spike train, the spike train providing a plurality of spikes over time.

In Example 8, the subject matter of any one or more of Examples 1-7 optionally include wherein the second spike is provided to the classifier neuron in an out-of-band communication independently of any synaptic connection.

In Example 9, the subject matter of any one or more of Examples 1-8 optionally include the electronic operations further including: receiving, with at least one other classifier neuron, at least one other spike, wherein the other spike is respectively provided via at least one other spike train; and weakening a second synaptic connection between the other classifier neuron and at least one other processing neuron of the neural network, in response to the other spike train; wherein spike timing dependent plasticity is used for strengthening the synaptic connection between the classifier neuron and the processing neuron, and for weakening the second synaptic connection between the other classifier neuron and the other processing neuron.

In Example 10, the subject matter of any one or more of Examples 1-9 optionally include the electronic operations further including: repeating training operations in the neural network for the particular classification, until a third spike is produced from the classifier neuron with the training data, wherein the third spike is a naturally produced spike produced in response to the first spike exceeding a threshold.

In Example 11, the subject matter of any one or more of Examples 1-10 optionally include wherein the supervised learning procedure is performed in a cascaded training procedure of a plurality of trained neural networks including the neural network, wherein the plurality of trained neural networks are trained from respective instances of the supervised learning procedure for a plurality of classifications, and wherein the respective instances of the supervised learning procedure operate on different sets of training data with different acceptance criteria.

In Example 12, the subject matter of Example 11 optionally includes wherein the plurality of trained neural networks are used for parallel evaluation of a subsequent data input using at least two of the plurality of trained neural networks.

In Example 13, the subject matter of any one or more of Examples 11-12 optionally include wherein the plurality of trained neural networks are used for cascaded evaluation of a subsequent data input using at least two of the plurality of trained neural networks.

In Example 14, the subject matter of any one or more of Examples 1-13 optionally include wherein the spiking neural network is provided by neuromorphic computing hardware having a plurality of cores, wherein respective cores of the plurality of cores are configurable to implement respective neurons used in the spiking neural network, and wherein spikes are used among the respective cores to communicate information on processing actions of the spiking neural network.

Example 15 is a computing device to implement a supervised learning procedure for a spiking neural network, the computing device comprising circuitry to: receive, with a classifier neuron of a neural network, a first spike via a synaptic connection, the synaptic connection established between the classifier neuron and a processing neuron of the neural network, wherein the first spike is provided from the processing neuron in response to training data of a particular classification; receive, with the classifier neuron, a second spike that is received subsequent to the first spike, wherein the second spike is provided to indicate a desired spike based on an association of the classifier neuron with the particular classification; and strengthen the synaptic connection between the classifier neuron and the processing neuron, in response to the second spike.

In Example 16, the subject matter of Example 15 optionally includes wherein operations to strengthen the synaptic connection between the classifier neuron and the processing neuron increase a weight of the synaptic connection between the classifier neuron and the processing neuron, wherein the weight of the synaptic connection is used by the classifier neuron to determine a classification of subsequent input data, wherein the classifier neuron is one of a plurality of neurons that are respectively associated with a plurality of classifications.

In Example 17, the subject matter of any one or more of Examples 15-16 optionally include the circuitry further to: receive, with the classifier neuron, at least one other spike via at least one other synaptic connection with at least one other processing neuron of the neural network, wherein the other spike is provided in response to the training data of the particular classification; and strengthen the other synaptic connection between the classifier neuron and the other processing neuron, in response to the second spike.

In Example 18, the subject matter of Example 17 optionally includes the circuitry further to: transmit, from the classifier neuron, a third spike in response to the first spike, wherein the third spike is a naturally produced spike produced from the classifier neuron in response to the first spike and the other spike exceeding a threshold.

In Example 19, the subject matter of any one or more of Examples 17-18 optionally include the circuitry further to: initialize respective synaptic weights prior to processing the training data in the neural network, the respective synaptic weights applied in the synaptic connection between the classifier neuron and the processing neuron and in the respective synaptic connection between the classifier neuron and the other processing neuron.

In Example 20, the subject matter of Example 19 optionally includes wherein operations to initialize respective synaptic weights include operations to initialize the respective synaptic weights based on random values.

In Example 21, the subject matter of any one or more of Examples 15-20 optionally include wherein the second spike is provided to the classifier neuron in a spike train, the spike train providing a plurality of spikes over time.

In Example 22, the subject matter of any one or more of Examples 15-21 optionally include wherein the second spike is provided to the classifier neuron in an out-of-band communication independently of any synaptic connection.

In Example 23, the subject matter of any one or more of Examples 15-22 optionally include the circuitry further to: receive, with at least one other classifier neuron, at least one other spike, wherein the other spike is respectively provided via at least one other spike train; and weaken a second synaptic connection between the other classifier neuron and at least one other processing neuron of the neural network, in response to the other spike train; wherein spike timing dependent plasticity is used to strengthen the synaptic connection between the classifier neuron and the processing neuron, and to weaken the second synaptic connection between the other classifier neuron and the other processing neuron.

In Example 24, the subject matter of any one or more of Examples 15-23 optionally include the circuitry further to: repeat training operations in the neural network for the particular classification, until a third spike is produced from the classifier neuron with the training data, wherein the third spike is a naturally produced spike produced in response to the first spike exceeding a threshold.

In Example 25, the subject matter of any one or more of Examples 15-24 optionally include wherein the supervised learning procedure is performed in a cascaded training procedure of a plurality of trained neural networks including the neural network, wherein the plurality of trained neural networks are trained from respective instances of the supervised learning procedure for a plurality of classifications, and wherein the respective instances of the supervised learning procedure operate on different sets of training data with different acceptance criteria.

In Example 26, the subject matter of Example 25 optionally includes wherein the plurality of trained neural networks are used for parallel evaluation of a subsequent data input using at least two of the plurality of trained neural networks.

In Example 27, the subject matter of any one or more of Examples 25-26 optionally include wherein the plurality of trained neural networks are used for parallel evaluation of a subsequent data input using at least two of the plurality of trained neural networks.

In Example 28, the subject matter of any one or more of Examples 15-27 optionally include wherein the spiking neural network is provided by neuromorphic computing hardware having a plurality of cores, wherein respective cores of the plurality of cores are configurable to implement respective neurons used in the spiking neural network, and wherein spikes are used among the respective cores to communicate information on processing actions of the spiking neural network.

Example 29 is a method of cascaded training implemented in a neural network, the method comprising electronic operations including: initializing and operating an instance of a neural network for classification training from a plurality of training samples, the classification training in the neural network performed for a plurality of classifications; identifying at least one excluded sample from the plurality of training samples; and repeating operations of initializing and operating a subsequent instance of the neural network for the classification training on the excluded sample.

In Example 30, the subject matter of Example 29 optionally includes wherein repeating operations of initializing and operating the subsequent instance of a neural network on the excluded sample is performed for a plurality of subsequent instances of the neural network, wherein each subsequent instance of the neural network operates different sets of training data with different acceptance criteria.

In Example 31, the subject matter of any one or more of Examples 29-30 optionally include wherein identifying the excluded sample includes identifying at least one training sample that is classified by the instance of the neural network to an incorrect classification.

In Example 32, the subject matter of any one or more of Examples 29-31 optionally include wherein identifying the excluded sample includes identifying at least one training sample that is classified by the instance of the neural network with a confidence score less than a predetermined threshold.

In Example 33, the subject matter of Example 32 optionally includes the electronic operations further including: identifying at least one other excluded sample from the plurality of training samples, wherein the other excluded sample is not classified by the subsequent instance of the neural network; and wherein identifying the other excluded sample includes identifying at least one sample that is classified by the instance of the neural network with a confidence score less than a second predetermined threshold, wherein the second predetermined threshold is less than the predetermined threshold.

In Example 34, the subject matter of any one or more of Examples 29-33 optionally include the electronic operations further including: performing classification of subsequent data, by a parallel evaluation of multiple instances of the neural network trained from the cascaded training, including: operating the multiple instances of the trained neural network in parallel on the subsequent data; evaluating a confidence score for respective classifications of the subsequent data produced from operating the multiple instances of the trained neural network; and identifying an expected classification of the subsequent data from one of the multiple instances of the trained neural network, based on the confidence score.

In Example 35, the subject matter of any one or more of Examples 29-34 optionally include the electronic operations further including: performing classification of subsequent data, by a cascaded evaluation of multiple instances of the neural network trained from the cascaded training, including: operating a first instance of the trained neural network on the subsequent data; evaluating a confidence score for classification of the subsequent data produced from operating the first instance of the trained neural network, relative to a confidence score threshold; and in response to determining that the confidence score is below a threshold, repeating the following operations until the confidence score of the classification exceeds the confidence score threshold: operating another instance of the trained neural network on the subsequent data; and evaluating the confidence score for the another instance of the trained neural network relative to the confidence score threshold, wherein the confidence score threshold is reduced for each subsequent operation of another instance of the trained neural network.

In Example 36, the subject matter of any one or more of Examples 29-35 optionally include the electronic operations further including: verifying a result of classification training, using test sample data having known respective classifications corresponding to the plurality of classifications.

In Example 37, the subject matter of any one or more of Examples 29-36 optionally include wherein the classification training of the plurality of training samples is provided from supervised spike timing dependent plasticity of the neural network, wherein the supervised spike timing dependent plasticity is influenced by receipt of a desired spike in respective classifier neurons of the neural network that correspond to the plurality of classifications.

In Example 38, the subject matter of any one or more of Examples 29-37 optionally include wherein the neural network is a spiking neural network provided by neuromorphic computing hardware.

Example 39 is a computing device configured for implementing learning in a neuron weight used in a neural network, the computing device comprising circuitry to: initialize and operate an instance of a neural network for classification training from a plurality of training samples, the classification training in the neural network performed for a plurality of classifications; identify at least one excluded sample from the plurality of training samples; and repeat operations to initialize and operate a subsequent instance of the neural network for the classification training on the excluded sample.

In Example 40, the subject matter of Example 39 optionally includes wherein the repeated operations to initialize and operate the subsequent instance of a neural network on the excluded sample are performed for a plurality of subsequent instances of the neural network, wherein each subsequent instance of the neural network operates different sets of training data with different acceptance criteria.

In Example 41, the subject matter of any one or more of Examples 39-40 optionally include wherein operations enabled by the circuitry to identify the excluded sample include identification of at least one training sample that is classified by the instance of the neural network to an incorrect classification.

In Example 42, the subject matter of any one or more of Examples 39-41 optionally include wherein operations enabled by the circuitry to identify the excluded sample include identification of at least one training sample that is classified by the instance of the neural network with a confidence score less than a predetermined threshold.

In Example 43, the subject matter of any one or more of Examples 39-42 optionally include the circuitry further to: identify at least one other excluded sample from the plurality of training samples, wherein the other excluded sample is not classified by the subsequent instance of the neural network; and wherein operations to identify the other excluded sample includes operations to identify at least one sample that is classified by the instance of the neural network with a confidence score less than a second predetermined threshold, wherein the second predetermined threshold is less than the predetermined threshold.

In Example 44, the subject matter of any one or more of Examples 39-43 optionally include the circuitry further to: perform classification of subsequent data, by a parallel evaluation of multiple instances of the neural network trained from the cascaded training, including operations to: operate the multiple instances of the trained neural network in parallel on the subsequent data; evaluate a confidence score for respective classifications of the subsequent data produced from operating the multiple instances of the trained neural network; and identify an expected classification of the subsequent data from one of the multiple instances of the trained neural network, based on the confidence score.

In Example 45, the subject matter of any one or more of Examples 39-44 optionally include the circuitry further to: perform classification of subsequent data, by a cascaded evaluation of multiple instances of the neural network trained from the cascaded training, to: operate a first instance of the trained neural network on the subsequent data; evaluate a confidence score for classification of the subsequent data produced from operating the first instance of the trained neural network, relative to a confidence score threshold; and in response to the confidence score below a threshold, repeating operations that, until the confidence score of the classification exceeds the confidence score threshold: operate another instance of the trained neural network on the subsequent data; and evaluate the confidence score for the another instance of the trained neural network relative to the confidence score threshold, wherein the confidence score threshold is reduced for each subsequent operation of another instance of the trained neural network.

In Example 46, the subject matter of any one or more of Examples 39-45 optionally include the circuitry further to: verify a result of classification training, with test sample data having known respective classifications corresponding to the plurality of classifications.

In Example 47, the subject matter of any one or more of Examples 39-46 optionally include wherein the computing device includes neuromorphic hardware components to implement the spiking neural network among a plurality of cores, wherein respective cores of the plurality of cores are configurable to implement respective neurons used in the spiking neural network, and wherein spikes are used among the respective cores to communicate information on processing actions of the spiking neural network.

Example 48 is a neuromorphic computing system, comprising: neuromorphic computing hardware, wherein the neuromorphic computing hardware is configurable to implement respective neurons used in a spiking neural network, and wherein spikes are used to communicate information of processing actions of the spiking neural network, and wherein the neuromorphic computing hardware supports supervised learning operations with the respective neurons used in the spiking neural network that: receive, with a classifier neuron of a neural network, a first spike via a synaptic connection, the synaptic connection established between the classifier neuron and a processing neuron of the neural network, wherein the first spike is provided from the processing neuron in response to training data of a particular classification; receive, with the classifier neuron, a second spike that is received subsequent to the first spike, wherein the second spike is provided to indicate a desired spike based on an association of the classifier neuron with the particular classification; and strengthen the synaptic connection between the classifier neuron and the processing neuron, in response to the second spike.

In Example 49, the subject matter of Example 48 optionally includes the neuromorphic computing hardware further to implement supervised learning operations that: receive, with the classifier neuron, at least one other spike via at least one other synaptic connection with at least one other processing neuron of the neural network, wherein the other spike is provided in response to the training data of the particular classification; and strengthen the other synaptic connection between the classifier neuron and the other processing neuron, in response to the second spike.

In Example 50, the subject matter of Example 49 optionally includes the neuromorphic computing hardware further to implement supervised learning operations that: transmit, from the classifier neuron, a third spike in response to the first spike, wherein the third spike is a naturally produced spike produced from the classifier neuron in response to the first spike and the other spike exceeding a threshold.

In Example 51, the subject matter of any one or more of Examples 48-50 optionally include wherein the second spike is provided to the classifier neuron in an out-of-band communication independently of any synaptic connection.

In Example 52, the subject matter of any one or more of Examples 48-51 optionally include the neuromorphic computing hardware further to implement supervised learning operations that: receive, with at least one other classifier neuron, at least one other spike, wherein the other spike is respectively provided via at least one other spike train; and weaken a second synaptic connection between the other classifier neuron and at least one other processing neuron of the neural network, in response to the other spike train; wherein spike timing dependent plasticity is used for strengthening the synaptic connection between the classifier neuron and the processing neuron, and for weakening the second synaptic connection between the other classifier neuron and the other processing neuron.

In Example 53, the subject matter of any one or more of Examples 48-52 optionally include the neuromorphic computing hardware further to implement learning operations that: repeat training operations in the neural network for the particular classification, until a third spike is produced from the classifier neuron with the training data, wherein the third spike is a naturally produced spike produced in response to the first spike exceeding a threshold.

Example 54 is a neuromorphic computing system, comprising: neuromorphic computing hardware, wherein the neuromorphic computing hardware is configurable to implement respective neurons used in a spiking neural network, and wherein spikes are used to communicate information of processing actions of the spiking neural network, and wherein the neuromorphic computing hardware supports cascaded training operations with the respective neurons used in the spiking neural network that: initialize and operate an instance of a neural network for classification training from a plurality of training samples, the classification training in the neural network performed for a plurality of classifications; identify at least one excluded sample from the plurality of training samples; and repeat operations to initialize and operate a subsequent instance of the neural network for the classification training on the excluded sample.

In Example 55, the subject matter of Example 54 optionally includes wherein the repeated operations to initialize and operate the subsequent instance of a neural network on the excluded sample are performed for a plurality of subsequent instances of the neural network, wherein each subsequent instance of the neural network operates different sets of training data with different acceptance criteria.

In Example 56, the subject matter of any one or more of Examples 54-55 optionally include wherein operations enabled by the neuromorphic computing hardware to identify the excluded sample include identification of at least one training sample that is classified by the instance of the neural network to an incorrect classification.

In Example 57, the subject matter of any one or more of Examples 54-56 optionally include wherein operations enabled by the neuromorphic computing hardware to identify the excluded sample include identification of at least one training sample that is classified by the instance of the neural network with a confidence score less than a predetermined threshold.

In Example 58, the subject matter of any one or more of Examples 54-57 optionally include the neuromorphic computing hardware further to implement learning operations that: identify at least one other excluded sample from the plurality of training samples, wherein the other excluded sample is not classified by the subsequent instance of the neural network; and wherein operations to identify the other excluded sample includes operations to identify at least one sample that is classified by the instance of the neural network with a confidence score less than a second predetermined threshold, wherein the second predetermined threshold is less than the predetermined threshold.

In Example 59, the subject matter of any one or more of Examples 54-58 optionally include the neuromorphic computing hardware further to implement learning operations that: perform classification of subsequent data, by a parallel evaluation of multiple instances of the neural network trained from the cascaded training, including operations to: operate the multiple instances of the trained neural network in parallel on the subsequent data; evaluate a confidence score for respective classifications of the subsequent data produced from operating the multiple instances of the trained neural network; and identify an expected classification of the subsequent data from one of the multiple instances of the trained neural network, based on the confidence score.

In Example 60, the subject matter of any one or more of Examples 54-59 optionally include the neuromorphic computing hardware further to implement learning operations that: perform classification of subsequent data, by a cascaded evaluation of multiple instances of the neural network trained from the cascaded training, including: operate a first instance of the trained neural network on the subsequent data; evaluate a confidence score for classification of the subsequent data produced from operating the first instance of the trained neural network, relative to a confidence score threshold; and in response to the confidence score below a threshold, repeating operations that, until the confidence score of the classification exceeds the confidence score threshold: operate another instance of the trained neural network on the subsequent data; and evaluate the confidence score for the another instance of the trained neural network relative to the confidence score threshold, wherein the confidence score threshold is reduced for each subsequent operation of another instance of the trained neural network.

Example 61 is at least one machine readable medium including instructions, which when executed by a computing system, cause the computing system to perform any of the methods of Examples 1-14 or 39-38.

Example 62 is at least one machine-readable storage medium, comprising a plurality of instructions adapted for implementing a supervised learning procedure in a spiking neural network, wherein the instructions, responsive to being executed with processor circuitry of a computing machine, cause the computing machine to perform operations that: receive, with a classifier neuron of a neural network, a first spike via a synaptic connection, the synaptic connection established between the classifier neuron and a processing neuron of the neural network, wherein the first spike is provided from the processing neuron in response to training data of a particular classification; receive, with the classifier neuron, a second spike that is received subsequent to the first spike, wherein the second spike is provided to indicate a desired spike based on an association of the classifier neuron with the particular classification; and strengthen the synaptic connection between the classifier neuron and the processing neuron, in response to the second spike.

In Example 63, the subject matter of Example 62 optionally includes wherein operations to strengthen the synaptic connection between the classifier neuron and the processing neuron increase a weight of the synaptic connection between the classifier neuron and the processing neuron, wherein the weight of the synaptic connection is used by the classifier neuron to determine a classification of subsequent input data, wherein the classifier neuron is one of a plurality of neurons that are respectively associated with a plurality of classifications.

In Example 64, the subject matter of any one or more of Examples 62-63 optionally include instructions further to cause the computing machine to perform operations that: receive, with the classifier neuron, at least one other spike via at least one other synaptic connection with at least one other processing neuron of the neural network, wherein the other spike is provided in response to the training data of the particular classification; and strengthen the other synaptic connection between the classifier neuron and the other processing neuron, in response to the second spike.

In Example 65, the subject matter of Example 64 optionally includes instructions further to cause the computing machine to perform operations that: transmit, from the classifier neuron, a third spike in response to the first spike, wherein the third spike is a naturally produced spike produced from the classifier neuron in response to the first spike and the other spike exceeding a threshold.

In Example 66, the subject matter of any one or more of Examples 64-65 optionally include instructions further to cause the computing machine to perform operations that: transmit, from the classifier neuron, a third spike in response to the first spike, wherein the third spike is a naturally produced spike produced from the classifier neuron in response to the first spike and the other spike exceeding a threshold.

In Example 67, the subject matter of Example 66 optionally includes wherein operations to initialize respective synaptic weights include operations to initialize the respective synaptic weights based on random values.

In Example 68, the subject matter of any one or more of Examples 62-67 optionally include wherein the second spike is provided to the classifier neuron in a spike train, the spike train providing a plurality of spikes over time.

In Example 69, the subject matter of any one or more of Examples 62-68 optionally include wherein the second spike is provided to the classifier neuron in an out-of-band communication independently of any synaptic connection.

In Example 70, the subject matter of any one or more of Examples 62-69 optionally include instructions further to cause the computing machine to perform operations that: receive, with at least one other classifier neuron, at least one other spike, wherein the other spike is respectively provided via at least one other spike train; and weaken a second synaptic connection between the other classifier neuron and at least one other processing neuron of the neural network, in response to the other spike train; wherein spike timing dependent plasticity is used to strengthen the synaptic connection between the classifier neuron and the processing neuron, and to weaken the second synaptic connection between the other classifier neuron and the other processing neuron.

In Example 71, the subject matter of any one or more of Examples 62-70 optionally include instructions further to cause the computing machine to perform operations that: repeat training operations in the neural network for the particular classification, until a third spike is produced from the classifier neuron with the training data, wherein the third spike is a naturally produced spike produced in response to the first spike exceeding a threshold.

In Example 72, the subject matter of any one or more of Examples 62-71 optionally include wherein the supervised learning procedure is performed in a cascaded training procedure of a plurality of trained neural networks including the neural network, wherein the plurality of trained neural networks are trained from respective instances of the supervised learning procedure for a plurality of classifications, and wherein the respective instances of the supervised learning procedure operate on different sets of training data with different acceptance criteria.

In Example 73, the subject matter of Example 72 optionally includes wherein the plurality of trained neural networks are used for parallel evaluation of a subsequent data input using at least two of the plurality of trained neural networks.

In Example 74, the subject matter of any one or more of Examples 72-73 optionally include wherein the plurality of trained neural networks are used for parallel evaluation of a subsequent data input using at least two of the plurality of trained neural networks.

In Example 75, the subject matter of any one or more of Examples 62-74 optionally include wherein the spiking neural network is provided by neuromorphic computing hardware having a plurality of cores, wherein respective cores of the plurality of cores are configurable to implement respective neurons used in the spiking neural network, and wherein spikes are used among the respective cores to communicate information on processing actions of the spiking neural network.

Example 76 is at least one machine-readable storage medium, comprising a plurality of instructions adapted for implementing cascaded training of a spiking neural network, wherein the instructions, responsive to being executed with processor circuitry of a computing machine, cause the computing machine to perform operations that: initialize and operate an instance of a neural network for classification training from a plurality of training samples, the classification training in the neural network performed for a plurality of classifications; identify at least one excluded sample from the plurality of training samples; and repeat operations to initialize and operate a subsequent instance of the neural network for the classification training on the excluded sample.

In Example 77, the subject matter of Example 76 optionally includes wherein the repeated operations to initialize and operate the subsequent instance of a neural network on the excluded sample are performed for a plurality of subsequent instances of the neural network, wherein each subsequent instance of the neural network operates different sets of training data with different acceptance criteria.

In Example 78, the subject matter of any one or more of Examples 76-77 optionally include wherein operations to identify the excluded sample include identification of at least one training sample that is classified by the instance of the neural network to an incorrect classification.

In Example 79, the subject matter of any one or more of Examples 76-78 optionally include wherein operations to identify the excluded sample include identification of at least one training sample that is classified by the instance of the neural network with a confidence score less than a predetermined threshold.

In Example 80, the subject matter of any one or more of Examples 76-79 optionally include instructions further to cause the computing machine to perform operations that: identify at least one other excluded sample from the plurality of training samples, wherein the other excluded sample is not classified by the subsequent instance of the neural network; and wherein operations to identify the other excluded sample includes operations to identify at least one sample that is classified by the instance of the neural network with a confidence score less than a second predetermined threshold, wherein the second predetermined threshold is less than the predetermined threshold.

In Example 81, the subject matter of any one or more of Examples 76-80 optionally include instructions further to cause the computing machine to perform operations that: perform classification of subsequent data, by a parallel evaluation of multiple instances of the neural network trained from the cascaded training, including operations to: operate the multiple instances of the trained neural network in parallel on the subsequent data; evaluate a confidence score for respective classifications of the subsequent data produced from operating the multiple instances of the trained neural network; and identify an expected classification of the subsequent data from one of the multiple instances of the trained neural network, based on the confidence score.

In Example 82, the subject matter of any one or more of Examples 76-81 optionally include instructions further to cause the computing machine to perform operations that: perform classification of subsequent data, by a cascaded evaluation of multiple instances of the neural network trained from the cascaded training, to: operate a first instance of the trained neural network on the subsequent data; evaluate a confidence score for classification of the subsequent data produced from operating the first instance of the trained neural network, relative to a confidence score threshold; and in response to the confidence score below a threshold, repeating operations that, until the confidence score of the classification exceeds the confidence score threshold: operate another instance of the trained neural network on the subsequent data; and evaluate the confidence score for the another instance of the trained neural network relative to the confidence score threshold, wherein the confidence score threshold is reduced for each subsequent operation of another instance of the trained neural network.

In Example 83, the subject matter of any one or more of Examples 76-82 optionally include instructions further to cause the computing machine to perform operations that: verify a result of classification training, with test sample data having known respective classifications corresponding to the plurality of classifications.

In Example 84, the subject matter of any one or more of Examples 76-83 optionally include wherein the computing machine includes neuromorphic hardware components to implement the spiking neural network among a plurality of cores, wherein respective cores of the plurality of cores are configurable to implement respective neurons used in the spiking neural network, and wherein spikes are used among the respective cores to communicate information on processing actions of the spiking neural network.

Example 85 is an apparatus comprising means for performing any of the methods of Examples 1-13 or Examples 19-25.

Example 86 is an apparatus, comprising: means for receiving, with a classifier neuron of a neural network, a first spike via a synaptic connection, the synaptic connection established between the classifier neuron and a processing neuron of the neural network, wherein the first spike is provided from the processing neuron in response to training data of a particular classification; means for receiving, with the classifier neuron, a second spike that is received subsequent to the first spike, wherein the second spike is provided to indicate a desired spike based on an association of the classifier neuron with the particular classification; and means for strengthening the synaptic connection between the classifier neuron and the processing neuron, in response to the second spike.

In Example 87, the subject matter of Example 86 optionally includes means for increasing a weight of the synaptic connection between the classifier neuron and the processing neuron, wherein the weight of the synaptic connection is used by the classifier neuron to determine a classification of subsequent input data, wherein the classifier neuron is one of a plurality of neurons that are respectively associated with a plurality of classifications.

In Example 88, the subject matter of any one or more of Examples 86-87 optionally include means for receiving, with the classifier neuron, at least one other spike via at least one other synaptic connection with at least one other processing neuron of the neural network, wherein the other spike is provided in response to the training data of the particular classification; and means for strengthening the other synaptic connection between the classifier neuron and the other processing neuron, in response to the second spike.

In Example 89, the subject matter of Example 88 optionally includes means for transmitting, from the classifier neuron, a third spike in response to the first spike, wherein the third spike is a naturally produced spike produced from the classifier neuron in response to the first spike and the other spike exceeding a threshold.

In Example 90, the subject matter of any one or more of Examples 88-89 optionally include means for initializing respective synaptic weights prior to processing the training data in the neural network, the respective synaptic weights applied in the synaptic connection between the classifier neuron and the processing neuron and in the respective synaptic connection between the classifier neuron and the other processing neuron.

In Example 91, the subject matter of Example 90 optionally includes means for initializing the respective synaptic weights based on random values.

In Example 92, the subject matter of any one or more of Examples 88-91 optionally include means for providing the second spike to the classifier neuron in a spike train, the spike train providing a plurality of spikes over time.

In Example 93, the subject matter of any one or more of Examples 88-92 optionally include means for providing the second spike to the classifier neuron in an out-of-band communication independently of any synaptic connection.

Example 94 is an apparatus, comprising: means for initializing and operating an instance of a neural network for classification training from a plurality of training samples, the classification training in the neural network performed for a plurality of classifications; means for identifying at least one excluded sample from the plurality of training samples; and means for repeating operations of initializing and operating a subsequent instance of the neural network for the classification training on the excluded sample.

In Example 95, the subject matter of Example 94 optionally includes means for repeating operations of initializing and operating the subsequent instance of a neural network on the excluded sample for a plurality of subsequent instances of the neural network, wherein each subsequent instance of the neural network operates different sets of training data with different acceptance criteria.

In Example 96, the subject matter of any one or more of Examples 94-95 optionally include means for identifying the excluded sample by identifying at least one training sample that is classified by the instance of the neural network to an incorrect classification.

In Example 97, the subject matter of any one or more of Examples 94-96 optionally include means for identifying the excluded sample by identifying at least one training sample that is classified by the instance of the neural network with a confidence score less than a predetermined threshold.

In Example 98, the subject matter of any one or more of Examples 94-97 optionally include means for identifying at least one other excluded sample from the plurality of training samples, wherein the other excluded sample is not classified by the subsequent instance of the neural network; and means for identifying the other excluded sample by identifying at least one sample that is classified by the instance of the neural network with a confidence score less than a second predetermined threshold, wherein the second predetermined threshold is less than the predetermined threshold.

In Example 99, the subject matter of any one or more of Examples 94-98 optionally include means for performing classification of subsequent data, by a parallel evaluation of multiple instances of the neural network trained from the cascaded training, including: means for operating the multiple instances of the trained neural network in parallel on the subsequent data; means for evaluating a confidence score for respective classifications of the subsequent data produced from operating the multiple instances of the trained neural network; and means for identifying an expected classification of the subsequent data from one of the multiple instances of the trained neural network, based on the confidence score.

In Example 100, the subject matter of any one or more of Examples 94-99 optionally include means for performing classification of subsequent data, by a cascaded evaluation of multiple instances of the neural network trained from the cascaded training, including: operating a first instance of the trained neural network on the subsequent data; evaluating a confidence score for classification of the subsequent data produced from operating the first instance of the trained neural network, relative to a confidence score threshold; and in response to determining that the confidence score is below a threshold, repeating the following operations until the confidence score of the classification exceeds the confidence score threshold: operating another instance of the trained neural network on the subsequent data; and evaluating the confidence score for the another instance of the trained neural network relative to the confidence score threshold, wherein the confidence score threshold is reduced for each subsequent operation of another instance of the trained neural network.

In the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment.

**Claims**

1. A method of implementing a supervised learning procedure in a spiking neural network, the method comprising electronic operations including:

   receiving, with a classifier neuron of a neural network, a first spike via a synaptic connection, the synaptic connection established between the classifier neuron and a processing neuron of the neural network, wherein the first spike is provided from the processing neuron in response to training data of a particular classification; receiving, with the classifier neuron, a second spike that is received subsequent to the first spike, wherein the second spike is provided to indicate a desired spike based on an association of the classifier neuron with the particular classification; and
   strengthening the synaptic connection between the classifier neuron and the processing neuron, in response to the second spike.

2. The method of claim 1, wherein the electronic operations for strengthening the synaptic connection between the classifier neuron and the processing neuron include increasing a weight of the synaptic connection between the classifier neuron and the processing neuron, wherein the weight of the synaptic connection is used by the classifier neuron to determine a classification of subsequent input data, wherein the classifier neuron is one of a plurality of neurons that are respectively associated with a plurality of classifications.

3. The method of claim 1, the electronic operations further including:

   receiving, with the classifier neuron, at least one other spike via at least one other synaptic connection with at least one other processing neuron of the neural network, wherein the other spike is provided in response to the training data of the particular classification; and
   strengthening the other synaptic connection between the classifier neuron and the other processing neuron, in response to the second spike.

4. The method of claim 3, the electronic operations further including:

   transmitting, from the classifier neuron, a third spike in response to the first spike,
   wherein the third spike is a naturally produced spike produced from the classifier neuron in response to the first spike and the other spike exceeding a threshold.

5. The method of claim 3, the electronic operations further including:

   initializing respective synaptic weights prior to processing the training data in the neural network, the respective synaptic weights applied in the synaptic connection between the classifier neuron and the processing neuron and in the respective synaptic connection between the classifier neuron and the other processing neuron.

6. The method of claim 5, wherein the electronic operations for initializing respective synaptic weights includes initializing the respective synaptic weights based on random values.

7. The method of any of claims 1 to 6, wherein the second spike is provided to the classifier neuron in a spike train, the spike train providing a plurality of spikes over time, and wherein the second spike is provided to the classifier neuron in an out-of-band communication independently of any synaptic connection.

8. The method of any of claims 1 to 7, the electronic operations further including:

   receiving, with at least one other classifier neuron, at least one other spike, wherein the other spike is respectively provided via at least one other spike train; and
   weakening a second synaptic connection between the other classifier neuron and at least one other processing neuron of the neural network, in response to the other spike train;
   wherein spike timing dependent plasticity is used for strengthening the synaptic connection between the classifier neuron and the processing neuron, and for weakening the second synaptic connection between the other classifier neuron and the other processing neuron.

9. The method of any of claims 1 to 8, the electronic operations further including:

repeating training operations in the neural network for the particular classification, until a third spike is produced from the classifier neuron with the training data, wherein the third spike is a naturally produced spike produced in response to the first spike exceeding a threshold.

10. A computing device configured for implementing a supervised learning procedure for a spiking neural network, the computing device comprising circuitry to:

receive, with a classifier neuron of a neural network, a first spike via a synaptic connection, the synaptic connection established between the classifier neuron and a processing neuron of the neural network, wherein the first spike is provided from the processing neuron in response to training data of a particular classification;
receive, with the classifier neuron, a second spike that is received subsequent to the first spike, wherein the second spike is provided to indicate a desired spike based on an association of the classifier neuron with the particular classification; and
strengthen the synaptic connection between the classifier neuron and the processing neuron, in response to the second spike.

11. The computing device of claim 10, wherein operations to strengthen the synaptic connection between the classifier neuron and the processing neuron increase a weight of the synaptic connection between the classifier neuron and the processing neuron, wherein the weight of the synaptic connection is used by the classifier neuron to determine a classification of subsequent input data, wherein the classifier neuron is one of a plurality of neurons that are respectively associated with a plurality of classifications.

12. The computing device of any of claims 10 to 11, the circuitry further to:

receive, with the classifier neuron, at least one other spike via at least one other synaptic connection with at least one other processing neuron of the neural network, wherein the other spike is provided in response to the training data of the particular classification; and
strengthen the other synaptic connection between the classifier neuron and the other processing neuron, in response to the second spike.

13. The computing device of any of claims 10 to 12, wherein the supervised learning procedure is performed in a cascaded training procedure of a plurality of trained neural networks including the neural network, wherein the plurality of trained neural networks are trained from respective instances of the supervised learning procedure for a plurality of classifications, and wherein the respective instances of the supervised learning procedure operate on different sets of training data with different acceptance criteria.

14. At least one machine readable medium including instructions, which when executed by a computing system, cause the computing system to perform any of the methods of claims 1-9.

15. An apparatus comprising means for performing any of the methods of claims 1-9.

**FIG. 1**

**FIG. 2**

**FIG. 3**

$$\Delta w = \Delta w^{des} + \Delta w^{post}$$

**FIG. 4A**

$$t^{pre} < t^{des}, t^{post}$$

**FIG. 4B**

**FIG. 5A**

**FIG. 5B**

$W_{i1}$ S-STDP

608A

608B

DESIRED
SPIKE
TRAIN(S)

PROCESSING
NEURONS

CLASSIFIER
NEURONS

602          604          606

600

*FIG. 6*

700

| 710 | INITIALIZE SYNAPTIC WEIGHTS RANDOMLY |
| 720 | SELECT DESIRED OUTPUT SPIKES FOR EACH CLASSIFIER NEURON |
| 730 | PRESENT INPUT SPIKE TRAIN(S) AND DESIRED OUTPUT SPIKE(S) AT CLASSIFIER NEURON(S) |
| 740 | COMPUTE ACTIVITY OF CLASSIFIER NEURONS BASED ON NET SYNAPTIC CURRENTS |
| 750 | PERFORM S-STDP RULE BASED ON SPIKE TIMING OF DESIRED AND ACTUAL SPIKES AT EACH CLASSIFIER NEURON |

760  DO DESIRED AND ACTUAL SPIKES MATCH FOR ALL SPIKES ACROSS ALL CLASSES?

N

Y

END

*FIG. 7*

FIG. 8

*FIG. 9*

EP 3 340 123 A1

**DATA SAMPLE** → **NET 1** → (C1,S1) → S1>=Th_1? —Y→ C*=C1

1005 — 1010 — 1015 — 1040 — 1045

N ↓

**NET 2** → (C2,S2) → S2>=Th_2? —Y→ C*=C2

1020 — 1025 — 1050 — 1055

N ↓

**NET N** → (Cn,Sn) → Sn>=Th_n? —Y→ C*=Cn

1030 — 1035 — 1060 — 1065

N ↓

$$S^* = \max_i(S_i),$$
C* IS THE CLASS LABEL THAT IS ASSOCIATED WITH S*

1070

*FIG. 10*

1100

1110 — INITIALIZE SYNAPTIC WEIGHTS OF NEURAL NETWORK BASED ON RANDOM WEIGHT VALUES

1120 — RECEIVE TRAINING DATA SAMPLE(S) FOR PROCESSING BY NEURAL NETWORK

1130 — PROCESS TRAINING DATA THROUGH HIGHER LEVELS OF NEURAL NETWORK

1140 — PROCESS INPUT SPIKE(S) AT CLASSIFICATION LAYER OF NEURAL NETWORK

1150 — INFLUENCE CLASSIFICATION AT CLASSIFICATION LAYER OF NEURAL NETWORK WITH DESIRED SPIKE TIMING(S)

1160 — POTENTIATE CONNECTION TO CLASSIFICATION NEURON BASED ON CONNECTIONS TO INPUT SPIKE(S)

1170 — REPEAT CLASSIFICATION FOR TRAINING DATA THAT REMAINS UNCLASSIFIED FROM OPERATIONS OF CLASSIFICATION LAYER

1180 — PERFORM CLASSIFICATION OF SUBSEQUENT INPUT DATA USING TRAINED NEURAL NETWORK

*FIG. 11*

1200

| 1210 | PROCESS INPUT TRAINING DATA IN NEURAL NETWORK |
| 1220 | RECEIVE SPIKE(S) AT CLASSIFIER NEURON VIA CONNECTION(S) WITH SOURCE NEURON(S) |
| 1230 | RECEIVE DESIRED SPIKE(S) AT CLASSIFIER NEURON |
| 1240 | STRENGTHEN CONNECTION(S) WITH SOURCE NEURON(S) IN RESPONSE TO DESIRED SPIKE(S) |

**FIG. 12**

1300

| 1310 | INITIALIZE AND OPERATE INSTANCE OF NEURAL NETWORK ON TRAINING SAMPLES |
| 1320 | IDENTIFY TRAINING SAMPLES HAVING INCORRECT CLASSIFICATION |
| 1330 | IDENTIFY TRAINING SAMPLES HAVING CLASSIFICATION PREDICTION SCORE BELOW THRESHOLD VALUE |
| 1340 | REPEAT EVALUATION OF TRAINING SAMPLES WITH NEW INSTANCE OF NEURAL NETWORK FOR MIS-PREDICTED SAMPLES OR SAMPLES WITH PREDICTION SCORE BELOW THRESHOLD VALUE |
| 1350 | VERIFY RESULT OF CLASSIFICATION TRAINING WITH TEST SAMPLE DATA |

**FIG. 13**

— 1400

| 1410 | INITIALIZE MULTIPLE INSTANCES OF NEURAL NETWORK |
| 1420 | OPERATE MULTIPLE INSTANCES OF NEURAL NETWORK IN PARALLEL ON INPUT DATA |
| 1430 | EVALUATE PREDICTION SCORE FOR RESPECTIVE CLASSIFICATIONS OF INPUT DATA |
| 1440 | IDENTIFY CLASSIFICATION OF INPUT DATA BASED ON PREDICTION SCORE |

*FIG. 14*

— 1500

| 1510 | INITIALIZE AND OPERATE INSTANCE OF NEURAL NETWORK ON INPUT DATA |
| 1520 | EVALUATE PREDICTION SCORE FOR CLASSIFICATION OF INPUT DATA |
| 1530 | REPEAT EVALUATION OF INPUT DATA WITH NEW INSTANCE OF NEURAL NETWORK IF PREDICTION SCORE IS BELOW THRESHOLD VALUE |
| 1540 | IDENTIFY CLASSIFICATION OF INPUT DATA IF PREDICTION SCORE MEETS OR EXCEEDS THRESHOLD VALUE |

*FIG. 15*

*FIG. 16*

33

Europäisches
Patentamt

European
Patent Office

Office européen
des brevets

# EUROPEAN SEARCH REPORT

Application Number

EP 17 20 5517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FILIP PONULAK ET AL: "Supervised learning in spiking neural networks with ReSuMe: sequence learning, classification, and spike shifting", NEURAL COMPUTATION, vol. 22, no. 2, 11 January 2010 (2010-01-11), pages 467-510, XP055184984, DOI: 10.1162/neco.2009.11-08-901 * figures 1,2,3,4,6,7 * * page 468, line 1 - page 479, last line * * page 488, line 15 - page 496, last line * | 1-15 | INV. G06N3/04 G06N3/08 |
| A | MARKATOPOULOU FOTEINI ET AL: "Cascade of classifiers based on binary, non-binary and deep convolutional network descriptors for video concept detection", 2015 IEEE INTERNATIONAL CONFERENCE ON IMAGE PROCESSING (ICIP), IEEE, 27 September 2015 (2015-09-27), pages 1786-1790, XP032826730, DOI: 10.1109/ICIP.2015.7351108 [retrieved on 2015-12-09] * abstract; figure 1 * * page 1787, left-hand column, line 20 - page 1788, left-hand column, last line * | 13 | |
| | -/-- | | |

TECHNICAL FIELDS
SEARCHED (IPC)

G06N

The present search report has been drawn up for all claims

| Place of search | Date of completion of the search | Examiner |
|---|---|---|
| The Hague | 19 April 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 17 20 5517

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FILIP PONULAK: "Analysis of the ReSuMe learning process for spiking neural networks", INTERNATIONAL JOURNAL OF APPLIED MATHEMATICS AND COMPUTER SCIENCE, vol. 18, no. 2, 16 June 2008 (2008-06-16), pages 117-127, XP055123321, DOI: 10.2478/v10006-008-0011-1 * abstract; figures 2-6 * * page 117, left-hand column, line 1 - page 120, right-hand column, last line * ----- | 1-15 | |
| A | ANDRZEJ KASI&NACUTE;SKI ET AL: "Comparison of supervised learning methods for spike time coding in spiking neural networks", INTERNATIONAL JOURNAL OF APPLIED MATHEMATICS AND COMPUTER SCIENCE, vol. 16, no. 1, 1 March 2006 (2006-03-01), pages 101-103, XP055217280, ISSN: 1641-876X * abstract; figures 1-2 * * page 106, right-hand column, line 10 - page 110, left-hand column, last line * ----- | 1-15 | TECHNICAL FIELDS SEARCHED (IPC) |

The present search report has been drawn up for all claims

| Place of search | Date of completion of the search | Examiner |
|---|---|---|
| The Hague | 19 April 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)